(19) Europäisches Patentamt
European Patent Office
Office européen des brevets

(11) EP 1 906 651 A2

(12) # EUROPEAN PATENT APPLICATION

(43) Date of publication:
**02.04.2008 Bulletin 2008/14**

(51) Int Cl.:
***H04N 5/00*** *(2006.01)* ***H04N 7/167*** *(2006.01)*

(21) Application number: **07252975.3**

(22) Date of filing: **27.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **03.08.2006 JP 2006212390**

(71) Applicant: **Sony Corporation**
**Tokyo (JP)**

(72) Inventor: **Shigeyuki, Yamashita**
**Tokyo (JP)**

(74) Representative: **DeVile, Jonathan Mark et al**
**D Young & Co**
**120 Holborn**
**London EC1N 2DY (GB)**

(54) **Signal processing**

(57) Disclosed is a signal processor including a serial-to-parallel converter inputting serial digital video signals for n channels and converting the serial digital video signals for respective channels into parallel digital video signals. The signal processor further includes a frame-synchronization scrambler scrambling predetermined bits of the parallel digital video signals and storing the initial values in the auxiliary data section as auxiliary data; and a self-synchronization scrambler scrambling the parallel digital data for respective channels; and a multiplexer multiplexing the parallel digital data for respective channels. The signal processor still further includes a multi-channel forming unit obtaining a predetermined number of bits from the parallel digital data and forming serial digital data for m channels; and a data-multiplexing parallel-to-serial converter generating serial digital data by multiplexing and converting the serial digital data for m channels formed by the multi-channel data forming unit.

FIG. 3

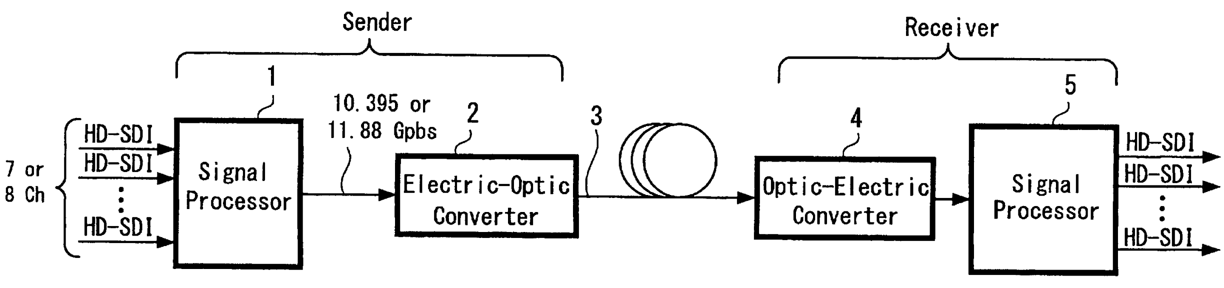


EP 1 906 651 A2

## Description

### Field of the Invention

The present invention relates to a signal processor and a method of processing signals. Embodiments of the present invention relate to a signal processor and a method of processing signals to serially transmit serial digital video signals for two or more channels after scrambling and multiplexing the signals. In particular, embodiments of the present invention relate to a signal processor and a method of processing signals, where the probability of generating a pathological pattern is sufficiently lowered and a receiver for receiving a serially-transmitted digital video signal is allowed to regenerate auxiliary data without modification.

### Background of the Invention

SMPTE (Society of Motion Picture and Television Engineers) in the United States has standardized the specifications of parallel digital video signals for the high-definition resolution (HD) for television broadcasting in SMPTE 274M and so on. In addition, SMPTE has standardized the specifications of SDI (Serial Digital Interface) for serial transmission of the parallel digital video signals at a bit rate of 1.485 Gbps or 1.485 Gbps/1.001 in SMPTE 292M.

Furthermore, in recent years, a technology of serially transmitting serial digital video signals (also referred to as HD-SDI signals) at a bit rate of 10 Gbps or more after multiplexing for two or more channels is also disclosed in Japanese unexamined patent publication No. 2005-218494 (JP-A 2005-218494).

In a next-generation broadcasting camera that transmits the HDTV signals (1920 × 1080/60I/4 : 2 : 2/10 bits) in the existing system, the prospective technology disclosed in JP-A 2005-218494 may well be used for serially transmitting the HDTV signals for two or more channels at high speed through a single cable.

In addition, the prospective technology disclosed in JP-A 2005-218494 may also well be used for serial transmission of digital video signals at a high speed, such as described in the following (a) to (c), with broader bands compared with those of digital video signals compliant with the SMPTE 274M standard.

(a) 1920 × 1080/60P/4 : 4 : 4/12-bit HDTV signals that will be used as next-generation HDTV signals).
(b) 1920 × 1080/90P/4 : 4 : 4/14-bit signals, for use in slow-motion replay of HDTV signals.
(c) 4 k × 2 k signals, such as 4096 × 2160/24P/4 : 4 : 4/12-bit signals as proposed in SMPTE DCDM (Digital Cinema Distribution Master).

The technology disclosed in JP-A 2005-218494, each HD-SDI signal is multiplexed after converting 8bit into 10 bit of a serial-to-parallel converted parallel digital video signal to prevent "H" and "L" bits from successive generation in the processing of signal-processing (Paragraph Nos. 0046 to 0057). However, there may be proposed a method of preventing "H" and "L" bits from successive generation by scrambling that is used for the existing HD-SDI signals (scrambling compliant with the SMPTE 292M standard). Alternatively, there may also be proposed a method in which a parallel digital video signal obtained by serial-to-parallel conversion of each HD-SDI signal is multiplexed in advance and the multiplexed signal.

The SMPTE 292M standard employs a self-synchronization scrambling system. In the self-synchronization scrambling system, the sender defines an input serial signal as a polynomial and sequentially divides the input serial signal by a 9th-degree primitive polynomial $X^9 + X^4 + 1$. The result thereof, quotient, is transmitted to statistically provide the transmission data with a mark rate (proportion between 1 and 0) of 1/2 in average. The scrambling involves the encryption of a signal by a primitive polynomial. The quotient is further divided by X + 1 to produce data having no polarity (i.e., data and reverse data thereof have the same information).

At the receiver, the received serial signal is by processing (descrambling); specifically, the received serial signal is multiplied by X + 1, and the obtained result is further multiplied by the above primitive polynomial $X^9 + X^4 + 1$, thereby regenerating the original serial signal.

When a video signal is subjected to such self-synchronization scrambling, a signal having a pattern of 1-bit "H" followed by consecutive 19-bit "L" (or the inverted pattern thereof) as shown in FIG. 1A or a signal having a pattern of consecutive 20-bit "H" followed by consecutive 20-bit "L" (or the inverted pattern thereof) as shown in FIG. 1B in a horizontal line on the serial transmission path. These patterns are referred to as pathological patterns.

The pattern or the inverted pattern thereof shown in FIG. 1A is a pattern with a number of direct-current components. For achieving a high-speed transmission rate such as transmission rate of 10 Gbps as disclosed in JP-A 2005-218494, a transmission system for AC coupling is generally used. However, when the pattern contains a number of direct current components, the transmission system for AC coupling may cause the inflection of a base line as shown in FIG. 2. As a result, the direct current components may be regenerated.

In addition, the pattern or the inverted pattern of FIG. 1B includes a small number of transitions from 0 to 1 or 1 to 0, so that the generation of a clock from a serial signal at the receiver may be difficult.

Thus, when HD-SDI signals for two or more channels are multiplexed and scrambled in the processing of signal-processing for high-speed serial transmission, transmission may be interfered with the generation of a pathological pattern.

## Summary of the Invention

Various respective aspects and features of the invention are defined in the appended claims. Features from the dependent claims may be combined with features of the independent claims as appropriate and not merely as explicitly set out in the claims.

Embodiments of the present invention may sufficiently lower the probability of generating pathological-pattern when serial digital video signals, such as HD-SDI signals, are multiplexed for two or more channels and then scrambled in the processing of signal-processing for high-speed serial transmission.

According to a first embodiment of the present invention, there is provided a first signal processor that includes a serial-to-parallel converter, a frame-synchronization scrambler, a self-synchronization scrambler, a multiplexer, a multi-channel-data forming unit, and a data-multiplexing - parallel-to-serial converter as follows:

In the serial-to-parallel converter, serial digital video signals for n channels (n is an integer of 2 or more) with a predetermined bit rate b 1 in a format, in which at least a video section and an auxiliary data section are arranged in time sequence, are input. In addition, serial digital video signals for the respective channels are serial-to-parallel converted.

In the frame-synchronization scrambler, a predetermined bit of only the video section of the parallel digital video signal for the respective channels being serial-to-parallel converted by the serial-to-parallel converter is scrambled with a random number generated by a random-number generator as an initial value of a resister, followed by storing the initial value as auxiliary data in the auxiliary data section.

The self-synchronization scrambler is provided for scrambling the parallel digital data for the respective channels scrambled by the frame-synchronization scrambler.

The multiplexer is provided for multiplexing the parallel digital data for the respective channels scrambled by the frame-synchronization scrambler.

The a multi-channel-data forming unit is provided for forming serial digital data for m channels each having a predetermined bit rate b2 by taking a predetermined number of bits each time from the parallel digital data multiplexed by the multiplexer (where b2 is a value smaller than b1, m is an integer larger than n, and $b1 \times n$ equals to $b2 \times m$).

The data-multiplexing - parallel-to-serial converter is provided for generating serial digital data with a bit rate of approximately $b1 \times n$ by subjecting the serial digital data for m channels formed by the multi-channel-data forming unit to multiplexing and parallel-to-serial conversion.

According to another embodiment of the present invention, there is provided a first signal-processing method that includes different steps as follows:

In the first step, a serial-to-parallel conversion is performed on serial digital video signals for n channels (n is an integer of 2 or more) with a predetermined bit rate b1 in a format, in which at least a video section and an auxiliary data section are arranged in time sequence, is input. In addition, the serial digital video signals for the respective channels are serial-to-parallel converted.

In the second step, scrambling is performed on a predetermined bit of only the video section of the parallel digital video signal for the respective channels being serial-to-parallel converted by the first step with a random number generated by a random-number generator as an initial value of a resister, followed by storing the initial value as auxiliary data in the auxiliary data section.

In the third step, scrambling is performed on the parallel digital data for the respective channels scrambled by the second step.

In the fourth step, multiplexing is performed on the parallel digital data for the respective channels scrambled by the third step.

In the fifth step, serial digital data for m channels is formed. The data for each channel has a predetermined bit rate b2 by taking a predetermined number of bits each time from the parallel digital data multiplexed by the third step (where b2 is a value smaller than b1, m is an integer larger than n, and $b1 \times n$ equals to $b2 \times m$).

In the sixth step, the digital data with a bit rate of approximately $b1 \times n$ is generated by subjecting the parallel data for m channels formed by the fifth to multiplexing and parallel-to-serial conversion.

The first signal processor and the first signal processing method according to the embodiments of the present invention are provided for signal processing on the transmission side where two or more serial digital video signals are multiplexed and transmitted. In the first signal processor and the first signal-processing method in accordance with the above embodiments of the invention, input serial digital video signals for n channels are serial-to-parallel converted, respectively. For the parallel digital video signals subjected to the serial-to-parallel conversion, the predetermined bit of only the video section, but not the entire signal, is scrambled by the frame-synchronization scrambler using the random number generated from the random-number generator as the initial value of the resister. The initial value is stored in an auxiliary data section and then scrambled by the auxiliary data section.

Subsequently, the scrambled parallel digital data for the respective channels are multiplexed. Then, serial digital data for m channels with a predetermined bit rate b2 (where b2 is a value smaller than b1, m is an integer larger than n, and b1 $\times$ n equals to b2 $\times$ m) is formed by taking a predetermined number of bits from the multiplexed parallel digital data each time. The parallel digital data for m channels is subjected to multiplexing and parallel-to-serial conversion, thereby generating serial digital data with a bit rate of approximately b1 $\times$ n.

Here, the frame-synchronization scrambler employs any random number as an initial value, so that the initial value of the resister may differ in each case. There, even if any pattern of serial digital video signals are input in this signal processor, the probability of generating a new pathological pattern is remarkably lowered by subjecting the signals to frame-synchronization scrambling.

Furthermore, the frame-synchronization scrambler performs frame-synchronization scrambling on only the video section among sections in the parallel digital video signal. Thus, no frame-synchronization scrambling is performed on any bit of the auxiliary data. Therefore, the unit at the receiver where serial digital video signals transmitted from the signal processor are received is able to regenerate auxiliary data even without performing frame-synchronization descrambling.

Furthermore, the initial value of the resistor at the time of scrambling by the frame-synchronization scrambler is transmitted after being stored in the auxiliary data section. Therefore, the unit at the receiver may regenerate the initial value from the auxiliary data section (as described above, the auxiliary data can be regenerated even without frame-synchronization descrambling). Thus, that initial value may be used as an initial value of a resistor for the frame-synchronization descrambler to allow the signal processor to regenerate an original signal of the video section before subjecting to frame-synchronization scrambling.

According to another embodiment of the present invention, there is provided a second signal processor that includes: a serial-to-parallel conversion multi-channel-data forming unit, a multiplexer, a self-synchronization descrambler, a self-synchronization descrambler, a frame-synchronization descrambler, a separator, a parallel-to-serial converter as follows:

In the serial-to-parallel conversion multi-channel-data forming unit, serial digital data with a bit rate of approximately b1 $\times$ n, in which serial digital video signals for n channels (n is an integer of 2 or more) with a predetermined bit rate b1 in a format in which at least a video section and an auxiliary data section are arranged in time sequence are multiplexed, is serial-to-parallel converted. In addition, serial digital data each having a predetermined bit rate b2 (where b2 is a value smaller than b1, m is an integer larger than n, and b1 $\times$ n equals to b2 $\times$ m) is formed from the serial-to-parallel-converted data.

The multiplexer is provided for multiplexing the serial digital data for m channels formed by the serial-to-parallel conversion multi-channel-data forming unit.

The self-synchronization descrambler is provided for descrambling the parallel digital data multiplexed by the multiplexer.

The frame-synchronization descrambler is provided for descrambling a predetermined bit of only the video section of the parallel digital data using a value read from the auxiliary data section of the parallel digital data descrambled by the self-synchronization descrambler as an initial value of a resistor.

The separator is provided for separating parallel digital data for n channels by taking a predetermined number of bits each time from the parallel digital data descrambled by the frame-synchronization descrambler.

The parallel-to-serial converter is provided for regenerating serial digital video signals for n channels each having a bit rate b1 by parallel-to-serial conversion of parallel digital data for the respective channels separated by the separator.

According to another embodiment of the present invention, there is provided a signal processing method that includes different steps as follows:

In the first step, serial-to-parallel conversion is performed on serial digital data with a bit rate of approximately b1 $\times$ n, in which serial digital video signals for n channels (n is an integer of 2 or more) with a predetermined bit rate b1 in a format in which at least a video section and an auxiliary data section are arranged in time sequence are multiplexed, and forming serial digital data each having a predetermined bit rate b2(where b2 is a value smaller than b1, m is an integer larger than n, and b1 $\times$ n equals to b2 $\times$ m) from the serial-to-parallel-converted data.

In the second step, multiplexing is performed on the serial digital data for m channels formed by the first step.

In the third step, descrambling is performed on the parallel digital data multiplexed in the second step by a self-synchronization descrambler.

In the fourth step, descrambling is performed on a predetermined bit of only the video section of the parallel digital data using a value read from the auxiliary data section of the parallel digital data descrambled in the third step by a frame-synchronization descrambler.

In the fifth step, parallel digital data for n channels by taking a predetermined number of bits each time is separated from the parallel digital data descrambled in the fourth step.

In the sixth step, serial digital video signals for n channels each having a bit rate b1 are regenerated by parallel-to-serial conversion of parallel digital data for the respective channels separated in fifth step.

The second signal processor and the second signal processor in accordance with the above embodiments of the invention are provided for signal processing at the receiver where the serial digital data multiplexed by the first signal processor and the first signal processing method is subjecting to signal processing at the receiver, respectively. In the second signal processor or the second signal processing method, serial digital data with a bit rate of approximately b1 × n obtained by the first signal processor or the first signal processing method is serial-to-parallel converted. Then, the data subjected to the serial-to-parallel conversion. Serial digital data for m channels with a predetermined bit rate b2 (where b2 is a value smaller than b1, m is an integer larger than n, and b1 × n equals to b2 × m) is formed from the data subjected to the serial-to-parallel conversion. Subsequently, the serial digital data for m channels is multiplexed. The multiplexed parallel digital data is then descrambled by the self-synchronization descrambler. After that, only a predetermined bit of the video section is descrambled by the frame-synchronization descrambler using a value read from the auxiliary data section as an initial value of a resistor. Consequently, an original signal of the video section before frame-synchronization scrambling at the sender is regenerated.

Furthermore, parallel digital data for n channel is separated by taking predetermined number of bits each time from the descrambled parallel digital data. Then, the parallel digital data for n channels is parallel-to-serial converted, thereby regenerating serial digital video signals for n channel with a bit rate of b1.

According to the above embodiments of the present invention, there is obtained an advantageous effect of sufficiently lowering the possibility of pathological-pattern to be generated when serial digital video signals, such as HD-SDI signals, are multiplexed for two or more channels and then scrambled in the processing of signal-processing for high-speed serial transmission.

According to the above embodiments of the present invention, there is obtained an advantageous effect of regenerating auxiliary data without modification by the unit at the receiver where serially-transmitted digital data is received. Furthermore, the unit of the receiver is allowed to regenerate an original signal of the video section before section before subjecting to frame-synchronization scrambling using the regenerated initial value from the auxiliary data section.

## Brief Description of the Drawings

The invention will now be described by way of example with reference to the accompanying drawings, throughout which like parts are referred to by like references, and in which:

FIGS. 1A and 1B are diagrams representing a pathological pattern.

FIG 2 is a diagram representing the inflection of a base line in a transmission system for AC coupling.

FIG. 3 is a diagram representing an entire configuration of a transmission system to which an embodiment of the present invention is applied.

FIG. 4 is a diagram representing a configuration of a signal processor at the sender shown in FIG. 3.

FIG. 5 is a diagram representing a configuration of a serial-to-parallel conversion-scrambling unit shown in FIG 4.

FIG. 6 is a diagram representing data structure of a parallel digital video signal converted by the S/P conversion-scrambling unit shown in FIG 5.

FIG. 7 is a diagram representing an outline of a self-synchronization scrambling system.

FIG. 8 is a diagram representing an outline of a frame-synchronization scrambling system.

FIG. 9 is a diagram representing scrambling using a frame-synchronization scrambler shown in FIG. 5.

FIG. 10 is a diagram representing a configuration example of the frame-synchronization scrambler shown in FIG. 5.

FIG. 11 is a diagram representing timing of an initial value set in the frame-synchronization scrambler shown in FIG. 5.

FIG. 12 is a diagram representing multiplexing processing in a multiplexer shown in FIG. 4.

FIG. 13 is a flowchart representing processing of a signal processor at the sender.

FIGS. 14A to 14D are diagrams each representing an example of data structure for one line of serial digital data generated from the signal processor at the sender.

FIG. 15A to 15D are diagrams each representing an example of data structure for one line of serial digital data generated from the signal processor at the sender.

FIG. 16 is still another diagram representing an example of data structure for one line of serial digital data generated from the signal processor at the sender.

FIG. 17 is a diagram representing a signal processor at the receiver shown in FIG. 3.

FIG. 18 is a diagram representing word synchronization processing in a TRS-detector shown in FIG. 17.

FIG. 19 is a flowchart representing processing of the signal processor at the receiver shown in FIG. 3.

FIG 20 is a diagram representing timing reference signal rewrite processing in the TRS-detector shown in FIG. 5 according to a modified example.

FIG. 21 is a diagram representing word synchronization processing in the TRS-detector shown in FIG. 17 according to the modified example.

## Description of the Example Embodiments

Hereinafter, example embodiments of the present invention will be described with reference to the accompanied diagrams. FIG. 3 is a schematic diagram illustrating an entire configuration of a transmission system to which an embodiment of the present invention is applied. In the transmission system, HD-SDI signals with a bit rate of 1.485 Gbps or 1.485 Gbps/1.001 (hereinafter, simply referred to as 1.485 Gbps) are input for seven channels or eight channels from an outside source at the sender. Subsequently, these input HD-SDI signals are multiplexed with serial digital data having a bit rate of 10.395 Gbps or 11.88 Gbps by a signal processor 1 and and then transmitted from an electric-optic converter 2 through an optical fiber cable 3.

The input HD-SDI signals to the sender may be converted according to the SMPTE 292M standard from respective digital video signals for seven channels or eight channels compliant with any standards, such as SMPTE 274M or 296M. Alternatively, the HD-SDI signals may be obtained such that digital video signals, such as those of (a) to (c) as described below, having a broader band than the digital video signals compliant with the SMPTE274 standard are mapped on HD-SDI signals for eight channels in accordance with the SMPTE435M standard:

(a) HDTV signals of 1920 × 1080/50P, 60P/4 : 4 : 4/12 bits, believed to be next-generation HDTV signals;
(b) HDTV signals of 1920 × 1080/1501, 180I/4 : 4 : 4/12 bits and 14 bits for slow-motion reproduction; and
(c) 4 k × 2 k signals, such as those of 4096 × 2160/24P/4 : 4 : 4/12 bits, proposed by the SMPTE Digital Cinema Distribution Master (SMTPE DCDM) for digital cinemas.

At the receiver in FIG. 3, an optic-electric converter 4 receives serial digital data with a bit rate of 10.395 Gbps or 11.88 Gbps transmitted from the sender through the optical fiber cable 3. Subsequently, a signal processor 5 regenerates HD-SDI signals for the original channels from the digital data, respectively.

FIG. 4 is a block diagram illustrating the signal processor 1 at the sender. HD-SDI signals for seven or eight channels entered from input ports 11-1 to 11-8 into the signal processor 1 (i.e., an input HD-SDI signal from the input port 11-1 is designated as one for the first channel) are transmitted to an S/P conversion-scrambling unit 12.

FIG. 5 is a block diagram illustrating a configuration of the S/P conversion-scrambling unit 12. The S/P conversion-scrambling unit 12 includes 8 blocks 12-1 to 12-8 for the respective input ports 11-1 to 11-8 on one-to-one basis. The blocks 12-2 to 12-8 perform approximately identical processing but the block 12-1 performs processing partially different from the rest of the blocks 12-2 to 12-8. In other words, the blocks 12-2 to 12-8 perform the identical processing. FIG. 5 represents the internal configurations of the representative blocks 12-1 and 12-2, respectively, where only TRS-detectors of the block 12-1 and the blocks 12-2 to 12-8 are provided with distinct reference numerals since different processing is carried out at these blocks.

The HD-SDI signal for the first channel entered from the input port 11-1 is transmitted to an S/P (serial-to-parallel) converter 21. In the S/P converter 21, the HD-SDI signal is subjected to a serial-to-parallel conversion and a descrambling processing, thereby converting into a parallel digital video signal with a bit rate of 74.25 Mbps or 74.25 Mbps/1.001 (hereinafter, simply referred to as 74.25 Mbps) and extracting a clock of 74.25 MHz.

FIG. 6 illustrates a data structure corresponding to one line of a parallel digital video signal converted by the S/P converter 21. The parallel digital video signal includes a 20-bit width with a parallel arrangement of a Y (luminance) data series and a Cb/Cr (color difference) data series, each having a word length of 10 bits.

In each of the Y data series and the Cb/Cr data series, the section of a timing reference signal EAV (End of Active Video), the section of line number data LN, the section of error-detecting code CRCC, and a horizontal-blanking period (auxiliary data section / undefined word data), the section of a timing reference signal (SAV)(Start of Active Video), the section of an active video in the video section (section of a luminance signal for the Y data series or section of a color-difference signal for the Cb/Cr data series) are sequentially arranged in time sequence.

Each of the timing reference signals SAV and EAV includes four words: 3FFh, 000h, 000h, and XYZh. Of these, the first three words, 3FFh, 000h, and 000h, are provided for determining word synchronization and horizontal synchronization. The last one word (XYZh) is provided for identifying the first field from the second field in the same frame or identifying SAV from EAV.

The auxiliary data stored in the horizontal-blanking period of the Y data series suitably contains the Pay load ID, four-word identification data based on the SMPTE 350M standard) that represents the information about video data of a relevant digital video signal.

As shown in FIG. 5, a parallel digital video signal converted by the S/P converter 21 is sent to a TRS-detector 22. In addition, a 74.25 MHz clock extracted by the S/P converter 21 is sent to a FIFO memory 27 as a write clock and simultaneously sent to a PLL 13 as shown in FIG. 4.

In the blocks 12-2 to 12-8, HD-SDI signals input in the input ports 11-2 to 11-8 are subjected to the conversion into parallel digital video signals and the clock extraction processing by exactly the same way as those for the block 12-1. The converted parallel digital video signals are sent to a TRS-detector 31, while an extracted clock is sent to a FIFO memory 27 as a write clock (but no clock is sent to the PLL 13 shown in FIG. 4 from the S/P converter 21 in any of the blocks 12-2 to 12-8).

The TRS-detector 22 in the block 12-1 carries on detecting a timing reference signal SAV/EAV (FIG 6) in the parallel digital video signal transmitting from the S/P converter 21 until the timing reference signal SAV/EAV is detected. When the timing reference signal SAV/EAV is detected, the following subsequent processing (1) to (4) are performed, while the parallel digital video signal is sent to a frame-synchronization scrambler 23.

(1) Backward and forward protection is prepared by a State Machine (see the Fibre Channel Standard ANSI X3.230-1994, pages 72-75).

(2) A frame rate of the parallel digital video signal is detected by counting the amount of data in the detected timing reference signal.

(3) A random number generator 24 is triggered at a timing at which the timing reference signal SAV is detected.

(4) The Payload ID is detected from the horizontal-blanking period and the detected result is then sent to a mode-switching unit 14 shown in FIG. 4.

In contrast, a TRS-detector 31 in each of the blocks 12-2 to 12-8 detects a timing reference signal SAV/EAV in a parallel digital video signal transmitted from the S/P converter 21. When the timing reference signal SAV/EAV is detected and the State Machine shifts to the Synchronization Acquired State, the above processing (1) to (4) are carried out and the parallel digital video signal is transmitted to the frame-synchronization scrambler 23. When the timing reference signal SAV/EAV is not detected, there is no signal input performed and then signals prepared by respectively setting a luminance signal and a color-difference signal to 040h (or the decimal numeral 64) and 200h (or the decimal number 512) are sent to the frame-synchronization scrambler 23.

The random number generator 24 sets the order of the frame-synchronization scrambler 23 to "n" and generating the numbers other than 0 (zero)(all "0" in terms of binary number) as a random number randomly selected from 0 to (2"-1). Such a random number is generated at a timing at which a trigger is given from the TRS-detector 22 and the randomized numbers are supplied to the frame-synchronization scrambler 23.

Prior to describing the configuration or operation of the frame-synchronization scrambler 23, the outlines of a self-synchronization scrambling system and a frame-synchronization scrambling system will be described with reference to FIG. 7 and FIG. 8, respectively.

As shown in FIG. 7, the self-synchronization scrambling system is provided for transmitting quotients obtained by consecutively dividing the input data by predetermined generator polynomial from the sender and then regenerating the original data by multiplying the received data by the same generator polynomial as that of the sender. The SMPTE 292M standard employs such a self-synchronization scrambling system.

On the other hand, as shown in FIG. 8, in the frame-synchronization scrambling system, the sender generates a pseudo-random signal by a generator polynomial on the basis of a predetermined timing reference signal in the input data, followed by transmitting data obtained by the exclusive-OR calculation (modulo-2 addition) of the received data and the pseudo-random signal thereof. In contrast, the receiver generates a pseudo-random signal is generated by the same generator polynomial by the same timing reference signal as those of the sender. The original data is reproduced by carrying out the exclusive-OR calculation (modulo-2 addition) of the received data and the pseudo-random signal thereof. Therefore, scrambling is not performed on the timing reference signal. In the Synchronous Digital Hierarchy (SDH), the standard of high-speed digital communications, adopts the frame-synchronization scrambling system.

Returning back to FIG. 5, the frame-synchronization scrambler 23 uses a random number from the random number generator 24 as an initial value of a register. Then, the least significant bit LSB of each of the Y data series and the Cb/Cr data series is subjected to the frame-synchronization scrambling (i.e., as shown in FIG. 8, the exclusive-OR calculation of the pseudo-random signal generated in the generator polynomial and the LSB is performed).

Subsequently, as shown in FIG. 9, the frame-synchronization scrambler 23 newly stores the result obtained by the exclusive-OR calculation with the LSB in the section of the active video. In addition, as shown in FIG. 9, the initial value from the resister (random number from the random number generator 24) is stored in a packet compliant with the SMPTE291M standard to be multiplexed as one of auxiliary data and the horizontal-blanking period (FIG. 6). Concurrently, an error-detecting code CRCC stored in the section of error-detecting code CRCC shown in FIG. 6 (this section is omitted from the illustration in FIG 9) is read out and then stored in a packet compliant with the SMPTE291M standard to be multiplexed as one of auxiliary data with a horizontal-blanking period. In each of the blocks 12-2 to 12-8, when no timing reference signal SAV/EAV is detected by the TRS-detector 31, a scrambling operation of the frame-synchronization scrambler 23 is turned off.

FIG. 10 is a diagram showing the configuration example of the frame-synchronization scrambler 23 (configuration of the seventh-order scrambler ($1+X^6+X^7$)). The initial values of seven-step flip-flops that includes the resister of the frame-synchronization scrambler are set by random numbers from the random number generator 24 (FIG. 5) for every horizontal line, respectively. Here, the order of the frame-synchronization scrambler 23 is 7, so that the random number generator 4 will generate a random number of 1 to 127 from 0 to ($2^7$-1) other than 0 (zero)(all "0" in terms of binary number). Thus, for example, if the generated random number is 100, then 100 = 64 (= $2^6$) + 32 (= $2^5$) + 4 (= $2^2$). Therefore, the initial values of the respective flip-flops that constitute the resister are set to 0, 0, 1, 0, 0, 1, and 1 in order from the first flip-flop (on the left-hand side of the figure).

FIG. 11 is a diagram showing the timing at which an initial value is set to the resister of the frame-synchronization scrambler 23. A random number is generated from the random number generator 24 at a timing when the TRS-detector 22 (FIG. 5) detects the timing reference signal SAV, thereby setting an initial value is set in the resister.

Furthermore, even though the seventh-order frame-synchronization scrambler 23 is represented in FIG. 10, the order of the frame-synchronization scrambler 23 is not limited thereto. In addition, a plurality of scramblers may optionally be prepared as the frame-synchronization scrambler 23 and the respective scramblers may be used while switching every other horizontal line. In addition, the order of the frame-synchronization scrambler 23 may be variable to store the information about the present order in a packet compliant with the SMPTE 291M, thereby allowing such information to be multiplexed with the horizontal-blanking period (FIG. 9) as one of auxiliary data.

Returning back to FIG. 5, the parallel digital data, which is formed by subjecting the parallel digital video signal to the frame-synchronization scrambling by the frame-synchronization scrambler 23, is sent to a CRCC recalculator 25. The CRCC recalculator 25 recalculates an error-correcting code CRCC with respect to parallel digital data with modified contents thereof by scrambling the east significant bit LSB in the section of the frame-synchronization scrambler 4. Then, the recalculated error-correcting code CRCC is multiplexed as a new error-correcting code CRCC with the section of the error-detecting code CRCC in FIG. 3 to rewrite the error-correcting CRCC of the section of the error-detecting code CRCC. Furthermore, in the blocks 12-2 to 12 to 8, when no timing reference signal SAV/EAV is detected by the TRS-detector 31, the recalculation operation of the CRCC recalculator 25 is also deactivated.

The parallel digital data passed through the processing of the CRCC recalculator 25 is written in a FIFO memory 27 after subjecting self-synchronization scrambling compliant with the SMPTE292M standard (FIG. 7) by a self-synchronization scrambler 26.

The PLL 13 in FIG. 4 transmits a 74.25-MHz clock synchronized with a 75.25-MHz clock from the S/P converter 21 as a read clock to the FIFO memory 16 in each of the blocks 12-1 to 12-8 and also to a multiplexer 15 in FIG. 4, while sending the clock as a write clock to the FIF memory 16 in FIG. 4.

In addition, when a signal-processing mode by a mode-switching unit 14 as mentioned later, is a 7-channel mode, the PLL 13 transmits a 81.2-MHz clock obtained by multiplying the frequency of the 74.25-MHz clock by 140/128, as a read clock to the FIFO memory 16 and also transmitting it as a write clock to the FIFO memory 18. On the other hand, when a signal-processing mode by a mode-switching unit 1 as mentioned later, is a 8-channel mode, the PLL 13 transmits a 92.8-MHz clock obtained by multiplying the frequency of the 74.25-MH clock by 160/128 as a read clock to the FIFO memory 16 and transmitting it as a write clock to the FIFO memory 18.

Furthermore, when the signal-processing mode is a 7-channel mode, the PLL 13 transmits a 162.4-MHz clock obtained by multiplying the frequency of the 74.25-MHz clock by 140/64, as a read clock to the FIFO memory 18. On the other hand, when the signal-processing mode is an 8-channel mode, the PLL 13 transmits a 185.6 MHz clock obtained by multiplying the frequency of the 74.25-MHz clock by 160/64, as a read clock to the FIFO memory 18.

Furthermore, when the signal-processing mode is a 7-channel mode, the PLL 13 transmits a 649.68-MHz clock obtained by multiplying the frequency of the 74.25-MHz clock by 35/4, to a multi-channel data formation unit 19. On the other hand, when the signal-processing mode is an 8-channel mode, the PLL 13 transmits a 74.25-MHz clock obtained by multiplying the frequency of the 742.5-MHz clock by 10 to the multi-channel data formation unit 19.

The lead parallel digital data is sequentially read on 10-bit-unit (word-unit) basis from the start of the timing reference signal SAV while the phase between the respective input channels is adjusted on the basis of both the timing reference signal SAV/EAV and the line number data LN (FIG. 6). Thus, the parallel digital data for seven or eight channels sequentially read on 10-bit-unit basis from the FIFO memory 27 in each of the blocks 12-1 to 12-8 is sent to the multiplexer 15 shown in FIG. 4.

In FIG. 4, the mode-switching unit 14 detects whether HD-SDI signals are input for seven channels or eight channels on the basis of the result of detecting the Payload ID by the TRS-detectors 22, 32 (FIG. 5) in the respective blocks 12-1 to 12-8 of the S/P conversion-scrambling unit 12. Subsequently, if the signals are input for seven channels, then the signal-processing mode is switched to a 7-channel mode. On the other hand, if the signals are input for eight channels, then the signal-processing mode is switched to an 8-channel mode. Signals that represent the present mode are transmitted to the PLL 13, the multiplexer 15, and the multi-channel data formation unit 19, respectively (signal lines from the mode-switching unit 14 to the respective units are omitted from the figure).

The multiplexer 15 combines parallel digital data for seven or eight channels sent from the S/P conversion-scrambling unit 12 with the respective channels every 10 bit units in the order of the 1st channel, 2nd channel, ... and 7th or 8th channel. FIG. 12 shows the situation of multiplexed portion of the timing reference signal SAV/EAV when the parallel digital data for eight channels are multiplexed. In this case, however, as described later with reference to FIG. 16, when HD-SDI signals for eight channels mapped from 4k × 2k signals are transmitted as serial digital data with a bit rate of 10.395 Gbps, data corresponding to all of eight channels may be multiplexed together for the data of active video section but data corresponding to only 1st, 3rd, 5th, and 7th channels may be multiplexed together for the data of the section of each of the LN, the timing reference signal EAV, the error-detecting code CRCC, the horizontal-blanking period, and the timing reference signal SAV.

The parallel digital data multiplexed by the multiplexer 15 is sent to the FIFO memory 16 as 140-bit-width parallel digital data when the signal-processing mode switched by the mode-switching unit 14 is a 7-channel mode. In contrast, when the signal-processing mode switched by the mode-switching unit 14 is an 8-channel mode, the data is sent as 160-bit-width parallel digital data to the FIFO memory 16. In the FIFO memory 16, the parallel digital data is written as a 74.25-MHz clock write clock from the PLL 13.

When the signal-processing mode switched by the mode-switching unit 14 is a 7 channel mode, the parallel digital data written in the FIFO memory 16 is read as 140-bit-width parallel digital data by a 81.2-MHz clock from the PLL 13. In contrast, when the signal-processing mode switched by the mode-switching unit 14 is an 8-channel mode, the data is read as 160-bit-width parallel digital data by a 92.8-MHz clock from the PLL 13. The parallel digital data read from the FIFO memory 16 is sent to a data-length converter 17.

The data-length converter 17 carries out data-length converting processing to convert the 140-bit-width or 160-bit-width parallel digital data from the FIFO memory 16 into 128-bit-width parallel digital data. The 128-bit-width parallel digital data converted by the data-length converter 17 is sent to the FIFO memory 18.

In the FIFO memory 18, the 128-bit-width parallel digital data is written by an 81.2-MHz (for the 7-channel mode) clock or a 92.8-MH clock (for the 8-channel mode) from the PLL 13. The parallel digital data written in the FIFO memory 18 is read as 64-bit-width parallel digital data by a 162.4-MHz clock (for the 7-channel mode) or a 185.6-MHz clock (for the 8-channel mode) from the PLL 13 and transmitting to the multi-channel data formation unit 19.

The multi-channel data formation unit 19, for example, is XSBI (Ten gigabit Sixteen Bit Interface: 16-bit interface used in the 10 Gb Ethernet (registered trademark) system). When the signal-processing mode switched by the mode-switching unit 14 is a 7-channel mode, the multi-channel data formation unit 19 forms serial digital data for 16 channels each having a bit rate of 649.6875 Mbps from a 64-bit-width parallel digital data from the FIFO memory 18 using a 49.6875-MHz clock from the PLL 13.

In contrast, when the signal-processing mode switched by the mode-switching unit 14 is an 8-channel mode, the multi-channel data formation unit 19 forms serial digital data for 16 channels each having a bit rate of 742.5 Mbps from a 64-bit-width parallel digital data from the FIFO memory 18. The serial digital data for 16 channels formed by the multi-channel data formation unit 19 is sent to a multiplex P/S converter 20.

The multiplex P/S converter 20 combines the serial digital data for 16 channels from the multi-channel data formation unit 19 and the multiplexed parallel digital data is then subjected to parallel-to-serial conversion. Therefore, when the serial digital data from the multi-channel data formation unit 19 has a bit rate of 649.6875 Mbps (for the 7-channel mode), serial digital data of a bit rate of 649.6875 Mbps × 16 = 10.395 Gbps is generated. In contrast, when the serial digital data from the multi-channel data formation unit 19 has a bit rate of 742.5 Mbps (for the 8-channel mode), the serial digital data has a bit rate of 742.5 Mbps × 16 = 11.88 Gbps is generated.

The serial digital data having a bit rate of 10.395 Gbps (for the 7-channel mode) or 11.88 Gbps (for the 8-channel mode) generated by the multiplex P/S converter 20 is sent from the signal processor 1 to the electric-optic converter 2 as shown in FIG. 3.

FIG. 13 is a flowchart that represents the outline of the processing of the signal processor 1 as described above. As represented by step S1, HD-SDI signals for seven or eight channels input from an external source are serial-to-parallel converted (processing carried out by the S/P converter 21 of each of the blocks 12-1 to 12-8 in FIG. 5).

Subsequently, as shown in steps S2 to S4, the processing for detecting a timing reference signal SAV/EAV carries on until HD-SDI signals for the fist channel (processing of the TRS-detector 22 in the block 12-1 in FIG. 5) but carries out once for HD-SDI signals for the second channel or subsequent channels (processing of the TRS-detector 31 in each of the bocks 12-2 to 12-8 in FIG 5).

When the timing reference signal SAV/EAV is detected as shown in steps S5 to S7, backward and forward protection is prepared by a State Machine, a frame rate is detected, and a signal-processing mode is switched in response to the detection of Payload ID (processing of the TRS-detectors 22 and 23 in the respective blocks 12-1 to 12-8 in FIG. 5 and the processing of the mode-switching unit 14 in FIG. 4).

In contrast, the HD-SDI signals of the second channel or subsequent channels, when no timing reference signal SAV/EAV is detected and the State Machine does not shift to the Synchronization Acquired State as shown in step S8, the values of a luminance signal and a color-difference signal are set to 040h (a decimal numeral of 64) and 200h (a decimal numeral of 512), respectively (processing of the TRS-detector 31 of each of the blocks 12-2 to 12-8 in FIG. 5).

Subsequently, as shown in steps S9 and S10, a random number is used as an initial value of the resister and the least significant bit LSB of only the active video section is then subjected to frame-synchronization scrambling. The result thereof is stored in the least significant bit LSB of the active video section, while the initial value of the resister and the error-detecting code CRCC read from the section of error-detecting code CRCC are multiplexed as auxiliary data with a horizontal-blanking period (processing of the frame-synchronization scrambler 23 in FIG 5). In addition, when no timing reference signal SAV/EAV is detected, the frame-synchronization scrambling is not performed.

Subsequently, as shown in steps S 11 and S12, for the parallel digital data subjected to the frame-synchronization scrambling, the error-correcting code CRCC is recalculated to rewrite the error-correcting code CRCC of the section of the error-detecting code CRCC, followed by subjecting to a self-synchronization scrambler (processing of the CRCC recalculator 25 and the self-synchronization scrambler 26 in FIG. 5). In addition, when any timing reference signal SAV/EAV is not detected, CRCC is not recalculated.

Furthermore, as shown in steps s13 to s 16, the parallel digital data for each channel is sequentially subjected to multiplexing, data-length conversion, 16-channel data formation, and multiplex and parallel-to-serial conversion processing, thereby generating serial digital data with a bit rate of 10.395 Gbps or 11.88 Gbps (processing from the multiplexer 15 to the multiplex P/S converter 20 in FIG 4).

FIGS. 14 to 16 are diagrams that exemplify a data structure for one line of serial digital data generated by the signal processor 1 as described above: each of FIG. 14 and FIG. 15 illustrates an example in which HD-SDI signals all having the same format and frame rate to be input to the signal processor are transmitted for seven or eight channels; and FIG. 16 illustrates an example in which 4k × 2k signals are transmitted. In FIGS. 14 to 16, however, the section of line number data LN and the section of error-detecting code CRCC (FIG. 6) are omitted from the illustration.

As shown in FIG. 14A, when 30P HD-SID signals are transmitted for seven channels, the number of bytes from the timing reference signal EAV to timing reference signal SAV is 3,920 bytes (but 1 byte = 10 bits), so that the number of bytes in the section of active video can be 26,880 bytes and the number of bytes in the whole line can be 30,800 bytes. The number of bytes can be counted from the following equations (in each equation below, the whole section from EAC to SAV is represented by "H-Blank Area".

$$10.395\text{Gbps} \div 30\text{frame/s} \div 1125\text{line/frame} = 2200\text{sample} \times 20\text{bit} \times 7\text{ch} = 308000\text{bit} = 30800\text{Byte}(1\text{Byte}=10\text{bit})$$

$$\text{Active Area} = 1920\text{sample} \times 20\text{bit} \times 7\text{ch} = 268800\text{bit} = 26880\text{Byte}$$

$$\text{H-Blank Area} = 280\text{sample} \times 20\text{bit} \times 7\text{ch} = 39200\text{bit} = 3920\text{Byte}$$

As shown in FIG. 14B, when 25P HD-SDI signals are transmitted for seven channels, the number of bytes from the timing reference signal EAV to timing reference signal SAV is 10,080 bytes (but 1 byte = 10 bits), so that the number of bytes in the section of active video can be 26,880 bytes and the number of bytes in the whole line can be 36,960 bytes. The number of bytes can be counted from the following equations.

$$10.395\text{Gbps} \div 25\text{frame/s} \div 1125\text{line/frame} = 2640\text{sample} \times 20\text{bit} \times 7\text{ch} = 369600\text{bit} = 36960\text{Byte}(1\text{Byte}=10\text{bit})$$

$$\text{Active Area} = 1920\text{sample} \times 20\text{bit} \times 7\text{ch} = 268800\text{bit} = 26880\text{Byte}$$

$$\text{H-Blank Area} = 720\text{sample} \times 20\text{bit} \times 7\text{ch} = 100800\text{bit} = 10080\text{Byte}$$

As shown in FIG. 14C, when 24P HD-SDI signals are transmitted for seven channels, the number of bytes from the timing reference signal EAV to timing reference signal SAV is 11,620 bytes, so that the number of bytes in the section of active video can be 26,880 bytes and the number of bytes in the whole line can be 38,500 bytes. The number of bytes can be counted from the following equations.

$$10.395Gbps \div 24frame/s \div 1125line/frame = 2750sample \times 20bit \times 7ch = 385000bit = 38500Byte(1Byte=10bit)$$

$$Active\ Area = 1920sample \times 20bit \times 7ch = 268800bit = 26880Byte$$

$$H\text{-}Blank\ Area = 830sample \times 20bit \times 7ch = 116200bit = 11620Byte$$

As shown in FIG. 14D, when HD-SDI signals of a 24P/2048 sample are transmitted for seven channels, the number of bytes from the timing reference signal EAV to timing reference signal SAV is 9,828 bytes, so that the number of bytes in the section of active video can be 28,672 bytes and the number of bytes in the whole line can be 38,500 bytes. The number of bytes can be counted from the following equations.

$$10.395Gbps \div 24frame/s \div 1125line/frame = 2750sample \times 20bit \times 7ch = 385000bit = 38500Byte(1Byte=10bit)$$

$$Active\ Area = 2048sample \times 20bit \times 7ch = 286720bit = 28672Byte$$

$$H\text{-}Blank\ Area = 702sample \times 20bit \times 7ch = 98280bit = 9828Byte$$

As shown in FIG. 15A, 30P HD-SDI signals are transmitted for eight channels, the number of bytes from the timing reference signal EAV to timing reference signal SAV is 4,480 bytes, so that the number of bytes in the section of active video can be 35,200 bytes and the number of bytes in the whole line can be 30,720 bytes. The number of bytes can be counted from the following equations.

$$11.88Gbps \div 30frame/s \div 1125line/frame = 2200sample \times 20bit \times 8ch = 352000bit = 35200Byte(1Byte=10bit)$$

$$Active\ Area = 1920sample \times 20bit \times 8ch = 307200bit = 30720Byte$$

$$H\text{-}Blank\ Area = 280sample \times 20bit \times 8ch = 44800bit = 4480Byte$$

As shown in FIG. 15B, 25P HD-SDI signals are transmitted for eight channels, the number of bytes from the timing reference signal EAV to timing reference signal SAV is 11,520 bytes, so that the number of bytes in the section of active video can be 30,720 bytes and the number of bytes in the whole line can be 42,240 bytes. The number of bytes can be counted from the following equations.

$$11.88Gbps \div 25frame/s \div 1125line/frame = 2640sample \times 20bit \times 8ch = 422400bit = 42240Byte(1Byte=10bit)$$

$$Active\ Area = 1920sample \times 20bit \times 8ch = 307200bit = 30720Byte$$

H-Blank Area = 720sample × 20bit × 8ch = 115200bit = 11520Byte

As shown in FIG. 15(c), 24P HD-SDI signals are transmitted for eight channels, the number of bytes from the timing reference signal EAV to timing reference signal SAV is 13,280 bytes, so that the number of bytes in the section of active video can be 30,720 bytes and the number of bytes in the whole line can be 44,000 bytes. The number of bytes can be counted from the following equations.

11.88Gbps ÷ 24frame/s ÷ 1125line/frame = 2750sample × 20bit × 8ch = 440000bit = 44000Byte( 1Byte=10bit)

Active Area = 1920sample × 20bit × 8ch = 307200bit = 30720Byte

H-Blank Area = 830sample × 20bit × 8ch = 132800bit = 13280Byte

As shown in FIG 15D, when HD-SDI signals of a 24P/2048 sample are transmitted for eight channels, the number of bytes from the timing reference signal EAV to timing reference signal SAV is 11,232 bytes, so that the number of bytes in the section of active video can be 32,768 bytes and the number of bytes in the whole line can be 44,000 bytes. The number of bytes can be counted from the following equations.

11.88Gbps ÷ 24frame/s ÷ 1125line/frame = 2750sample × 20bit × 8ch = 440000bit = 44000Byte( 1Byte=10bit)

Active Area = 2048sample × 20bit × 8ch = 327680bit = 32768Byte

H-Blank Area = 702sample × 20bit × 8ch = 112320bit = 11232Byte

As shown in FIG. 16, when HD-SID signals for eight channels mapped from 4k × 2k signals are transmitted as serial digital data with a bit rate of 10.395 Gbps, the number of bytes from the timing reference signal EAV to timing reference signal SAV is 5,732 bytes, so that the number of bytes in the section of active video can be 32,768 bytes and the number of bytes in the whole line can be 38,500 bytes.

The byte count can be determined as follows: Data of the active vide section for all eight channels are multiplexed, whole the data of each of the timing reference signal EAV, line number data LN, and error-detecting code CRCC sections for the 1st, 3rd, 5th, and 7th channels are multiplexed but those for the 2nd, 4th, 6th, and 8th channels are not multiplexed. Furthermore, as described in the following equations, 116-byte data for adjusting the amount of data is added after the horizontal-blanking period to attain a byte count of 5,732 bytes from the timing reference signal EAV to the timing reference signal SAV.

H-Blank Data = 702sample × 20bit = 14040bit = 1404Byte
1404Byte × 4ch + 116Byte = 5732Byte

As a result, the byte count for transmitting 4 × 2k signals can be figured out from the following equations and represented as shown in FIG. 16.

10.395Gbps ÷ 24frame/s ÷ 1125line/frame = 385000bit = 38500Byte( 1Byte=10bit)

$$\text{Active Area} = 2048\text{sample} \times 20\text{bit} \times 8\text{ch} = 327680\text{bit} = 32768\text{Byte}$$

$$\text{H-Blank Area} = 38500\text{Byte} - 32768\text{Byte} = 5732\text{Byte}$$

As shown in FIG. 3, serial digital data with a bit rate of 10.395 Gbps or 11.88 Gbps generated from the signal processor 1 and transmitted to the electric-optic converter 2 is converted into optical signals and then transmitted through the optical fiber cable 3. At the receiver, the serial digital data is received by the receiving-side optic-electric converter 4 and then converted into electric signals by the electric-optic converter 4 and then transmitted through the electric-optic converter 2, thereby converting into electric signals through the optic-electric converter 4. Subsequently, the electric signals are input into the signal processor 5.

FIG 17 is a block diagram showing the configuration of the signal processor 5 at the receiver. Serial digital data of a bit rate of 10.395 Gbps or 11.98 Gbps input from the optic-electric converter 4 is transmitted to an S/P conversion multi-channel data formation unit 41. The S/P conversion multi-channel data formation port 41 may be, for example, XSBI.

When the input serial digital data has a bit rate of 10.395 Gbps, the S/P conversion multi-channel data formation unit 41 performs the serial-to-parallel conversion of the serial digital data and forms serial digital data for 16 channels with a bit rate of 649.6875 Mbps from parallel digital data subjected to the serial-to-parallel conversion, respectively, while extracting a 649.6875-MHz clock.

In contrast, when the input serial digital data has a bit rate of 11.88 Gbps, the S/P conversion multi-channel data formation unit 41 performs the serial-to-parallel conversion of the serial digital data and forms serial digital data for 16 channels with a bit rate of 742.5 Mbps from parallel digital data subjected to the serial-to-parallel conversion, respectively, while extracting a 742.5-MHz clock.

The parallel digital data for 16 channels formed by the S/P conversion multi-channel data formation unit 41 are transmitted to a multiplexer 42. In addition, a 659.6875-MHz or 74.25-MHz clock extracted by the S/P conversion multi-channel data formation unit 41 is sent to a PLL 51.

The multiplexer 42 combines serial digital data for 16 channels from the S/P conversion multi-channel data formation unit 41 are multiplexed and 64-bit-width parallel digital data is then transmitted to a FIFO memory 43.

The PLL 51 transmits a 162.4-MHz or 185.6-MHz clock obtained by frequency-dividing into quarters a 649.6875-MHz or 742.5-MHz clock from the S/P conversion multi-channel data formation unit 41 as a write clock to the FIFO memory 43. In addition, the PLL 51 transmits an 81.2-MHz or 92.8-MHz clock obtained by frequency-dividing into one eighth a 649.6875-MHz or 742.5-MHz clock from the S/P conversion multi-channel data formation unit 41 as a write clock to the FIFO memory 50.

In the FIFO memory 43, 64-bit-width parallel digital data from the multiplexer 42 is written by a 162.4-MHz or 185.6-MHz clock from the PLL 51. The parallel digital data written in the FIFO memory 43 is read as 128-bit-width parallel digital data by an 81.2-MHz or 92.8-Mhz inner clock from the PLL 51 and then sent to a self-synchronization descrambler 44.

The self-synchronization descrambler 44 executes self-synchronization descrambling compliant with the SMPTE292M standard on 128-bit-width parallel digital data from the FIFO memory 43 while shifting 1 bit at a time. The parallel digital data descrambled by the self-synchronization descrambler 44 is sent to a TRS-detector 45 and an auxiliary data reading unit 46.

The TRS-detector 45 determines word synchronization by detecting a break for every 10 bits where 3FFh or 000h in the timing reference signal SAV/EAV can be continuously detected in parallel digital data transmitted while shifting 1 bit at a time from the self-synchronization descrambler 44 as shown in FIG. 18 (multiplexed timing reference signals SAV/EAV are detected in the multiple unit 15 of the signal processor 1 at the sender). When the break is detected, the bit shift of the self-synchronization descrambler 44 is terminated, followed by carrying out the following processing (1) to (3):

(1) Backward and forward protection is prepared by a State Machine;

(2) Whether serial digital data input from the signal processor 5 is prepared by multiplexing HD-SDI signals for seven channels or multiplexing HD-SDI signals for eight channels is detected by counting the amount of data between timing reference signals SAV, or the like.

When the multiplexed HD-SDI signals are prepared for seven channels, the signal-processing mode is switched to the 7-channel mode. In contrast, when the HD-SDI signals for eight channels are prepared, the signal-processing mode is switched to the 8-channel mode, followed by sending signals for indicating the present mode to the PLL 43, the data-length converter 49, and a separator 52 (signal lines thereof are omitted from the illustration), respectively.

(3) A trigger is given to an auxiliary data reading unit 46 at the timing of detecting a timing reference signal EAV of each channel, while a trigger is given to a frame-synchronization descrambler 47 at the timing of detecting a timing reference signal EAV of each channel.

The auxiliary data reading unit 46 reads out auxiliary data from the horizontal-blanking period (FIG. 6, FIG. 9) as well as reading out the error-detecting code CRCC from the section (FIG 6) of the error-detecting code of the CRCC recalculator 25 (FIG. 5) of the signal processor 1 at the sender) for each channel (of seven or eight channels) on the basis of the trigger from the TRS-detector 45.

In addition, for each cannel (of seven or eight channels), the auxiliary data reading unit 46 determines whether an error occurred in the optical fiber cable 3 (FIG. 3), a transmission path connecting between the sender and the receiver, on the basis of the error-detecting code CRCC read from the section of the error-detecting code CRCC. If the error has occurred, the information representing such an error is provided as auxiliary data and multiplexed in the horizontal-blanking period.

Furthermore, the auxiliary data reading unit 46 sends the initial value of the resister among the auxiliary data read out of the horizontal-blanking period of each channel (of seven or eight channels) (the initial value of the resister multiplexed with the horizontal-blanking period by the frame-synchronization scrambler 23 of the signal processor 1 at the sender (FIG. 5)).

The parallel digital data descrambled by the self-synchronization descrambler 44 is supplied to the frame-synchronization descrambler 47 through the TRS-detector 45. The frame-synchronization descrambler 47 executes frame-synchronization descrambling for each channel (of seven or eight channels) on the least significant bit LSB of each of Y data series and Cb/Cr data series using the initial value of the resister supplied from the auxiliary data reading unit 46 (in other words for only the active video section (FIG. 6, FIG. 9), on the basis of the trigger from the TRS-detector 45, as shown in FIG 8, pseudo-random signal caused from the generated polynomial equation and the LSB are subjected to exclusive OR calculation).

The parallel digital data subjected to the frame-synchronization descrambling by the frame-synchronization descrambler 47 is sent to a CRCC recalculator 48. The CRCC recalculator 48 reads out the error-detecting code CRCC from the horizontal-blanking period (FIG. 6, FIG. 9) of the parallel digital data for each channel (seven or eight channels) (the error-detecting code CRCC originally stored in the section of the error-detecting code CRCC in FIG. 6 prior to multiplexing in the horizontal-blanking period by the frame-synchronization scrambler of the signal processor 1 at the sender). Errors are corrected using the error-detecting code ORCC. The CRCC recalculator 48 recombines the error-detecting code CRCC read from the horizontal-blanking period with the section of the error-detecting code CRCC, thereby rewriting the original error-correcting code CRCC on the section of the error-detecting code CRCC. The parallel digital video signal, which is error-corrected and re-multiplexed with the error-detecting code CRCC by the CRCC recalculator 48, is then sent to the data-length converter 49.

A data-length converter 49 carries out data-length converting processing as follows: 128-bit-width parallel digital data is converted into 140-bit-width parallel digital data when the signal-processing mode of the TRS-detector45 is a 7-channel mode, while 128-bit-width parallel digital data is converted into 160-bit-width parallel digital data when the signal-processing mode of the TRS-detector45 is a 8-channel mode. The 140-bit-width or 160-bit-width parallel digital data is changed in the data length by the data-length converter49 is sent to a FIFO memory 50.

In the FIFO memory 50, the 140-bit-width or 160-bit-width parallel digital data is written in an 81.2-MHz or 92.8-MHz clock from PLL 51, respectively.

When the Signal-processing mode of the TRS-detector 45 is a 7-chanel mode, the PLL 51 transmits a 74.25-MHz clock as a read clock obtained by frequency-dividing a 649.6875-MHz clock from the S/P conversion multi-channel data formation unit into 4/35. On the other hand, when the Signal-processing mode of the TRS-detector 45 is an 8-chanel mode, the PLL 51 transmits a 74.25-MHz clock as a read clock obtained by frequency-dividing a 742.5-MHz clock from the S/P conversion multi-channel data formation unit into 1/10.

The read clock allows the 140-bit-width or 160-bit-width parallel digital data written in the FIFO memory 50 to be read out as parallel digital data with the same bit width at the time of the writing. The 140-bit-width or 160-bit-width parallel digital data is then sent to a separator 52.

The separator 52 separates the parallel digital data from the FIFO memory 50 on 10-bit-unit (word-unit) basis. Thus, in the case of the 7-channel mode, parallel digital data for seven channels may include the identical line-data structure (FIG. 6) as that converted by the S/P converter 21 (FIG. 5) of the signal processor 1 at the sender. On the other hand, in the case of the 8-channel mode, parallel digital data can be reconstituted for eight channels and having the same line-data structure (FIG. 6) as one converted by the S/P converter 21 (FIG. 5).

The reconfigured parallel digital data for the first, second, ... and seventh or eighth are sent to the P/S (parallel-to-serial) converters 53-1, 53-2, ... and 53-7 or 53-8, respectively. In each of the P/S converters 53-1 to 53-8, the parallel digital video signal is subjected to parallel-to-serial conversion to regenerate a HD-SDI signal with a bit rate of 1.485 GHz, which is the same as one input in the signal processor 1 at the sender.

The HD-SDI signals regenerated by the P/S converters 53-1 to 53-8 are output from output ports 54-1 to 54-8 to the outside of the signal processor 5, respectively.

FIG. 19 is a flowchart representing the outline of the processing of the signal processor 5 as described above. As represented by step 521, serial digital data with a bit rate of 649.6875 Mbps or 742.5 Mbps for 16 channels are formed using serial digital data with a bit rate of 10.395 Gbps or 11.88 Gbps input by the optic-electric converter 4 (processing of the S/P conversion multi-channel data formation unit 41).

Subsequently, as shown in step S22, parallel digital data multiplexed with the serial digital data for 16 channels is subjected to self-synchronization descrambling (processing of the multiplexer 42 and the self-synchronization descrambler 44).

Subsequently, as shown in steps s23 to S25, the processing of detecting a timing-reference signal SAV/EAV is performed. When the timing reference signal SAV/EAV is detected, backward and forward protection is prepared by a State Machine and the switching of a signal-processing mode are carried out (processing of the TRS-detector 45).

Subsequently, as shown in steps S26 to S28, a transmission error is checked using the error-detecting code CRCC read from the section of error-detecting code CRCC. The least significant bit LSB of only the active video section is multiplexed with the frame-synchronization descrambling using the initial value of the resister read from the horizontal-blanking period. The error-detecting code CRCC read from the horizontal-blanking period is used to correct errors. The error-detecting code CRCC is then written back to the section of error-detecting code CRCC (Processing of the auxiliary data reading unit 46, the frame-synchronization descrambler47, and the CRCC recalculator48).

Furthermore, as shown in steps S29 to S31, the data-length conversion processing, the processing of separating the seven or eight channels, and the parallel-to-serial conversion processing are performed in order to regenerate the same HD-SDI signals for seven or eight channels as those input in the signal processor 1 at the sender (processing from the data-converter 49 to the P/S converter 53-1 to 53-8).

As described above, in the signal processor 1 at the sender of this transmission system, a parallel digital video signal obtained by serial-to-parallel conversion of the input HD-SDI signal for each channel is subjected to scrambling by the frame-synchronization scrambler 23 using a random number as the initial value of the resister for a predetermined bit of only the active video section but not the whole signal. The initial value is stored in the auxiliary data section and then subjected to self-synchronization scrambling.

Here, the frame-synchronization scrambler 23 uses any random number as the initial value of the resister, so that the initial value may vary in each case. Therefore, even if any kind of a HD-SDI signal is input in the signal processor 1, the probability of generating a new pathological pattern is remarkably low because of subjecting to frame-synchronization scrambling.

Consequently, HD-SDI signals for seven or eight channels can be multiplexed and scrambled in signal-processing for high-speed serial transmission at a bit rate of 10.395 Gbps or 11.88 Gbps. Further, the probability of generating a pathological pattern can be significantly lowered.

Furthermore, the frame-synchronization scrambler 23 combines only the active video section with the frame-synchronization scrambling. Thus, no bit of auxiliary data is multiplexed with the frame-synchronization scrambling. Therefore, in the signal processor 5 at the receiver, auxiliary data can be regenerated from the received serial digital data without multiplexing with the frame-synchronization descrambling.

Subsequently, the initial value of resister obtained when scrambled by the frame-synchronization scrambler 23 is stored in the auxiliary data section and then sent to the signal processor 5 at the receiver. Then, this initial value regenerated from the auxiliary data section (as described above, the auxiliary data can be also regenerated without multiplexing with the frame-synchronization descrambling) is used as initial value of the resister of the frame-synchronization descrambler 47 to use the least significant bit of only the active video section with the frame-synchronization descrambling. The signal processor 1 at the sender restores the data of the active video section before multiplexing with frame-synchronization scrambling.

An error-correcting code CRCC obtained by recalculating parallel digital data in which the contents thereof are changed by scrambling with the frame-synchronization scrambler 23 is newly stored in the section of error-correcting code CRCC and then sent from the signal processor 1 to the signal processor 5. Therefore, the signal processor can detect an error occurred in the transmission path on the basis of the recalculated error-correcting code CRCC.

The error-detecting code CRCC originally stored in the section of error-detecting code CRCC of HD-SDI signals input in the signal processor1 at the sender is stored in the auxiliary data section and transmitted from the signal processor1. Thus, in the signal processor 5 at the receiver, the error-detecting code CRCC reproduced from the auxiliary data section is used to determine whether an error occurred before being input into the transmission system or occurred at the time of multiplex transmission in the transmission system.

Furthermore, in the example as described above, the frame-synchronization scrambler 4 and the frame-synchronization descrambler 16 are employed in scrambling and descrambling the least significant bit of the active video section, respectively. However, the present invention is not limited to such a configuration. A predetermined bit other than the least significant bit of the active video section may be scrambled or descrambled. However, from the viewpoint of reducing the effect on the luminance signal (Y) and the color-difference signal (Cb/Cr) of the active video section, it is more desirable to scramble or descramble the least signification bit.

In the above example, frame-synchronization scrambling or self-synchronization scrambling is carried out in advance on parallel digital video signals obtained by serial-to-parallel conversion of input HD-SDI signals for the respective channels in the signal processor 1 at the sender, followed by multiplexing such parallel digital data being scrambled. The aims of such a procedure are as follows: When parallel digital video signals for two or more channels are multiplexed in advance and the multiplexed parallel digital data is then scrambled, processing in which the remainder obtained by performing a division in a division circuit is used in the next arithmetical operation and repeated in a scrambler (see, for example, page 22, FIG. 21 of "XAPP680 (v. 1.0)", November 25, 2003). Therefore, the division circuit has difficulty in timing control when the present FPGA is used to realize the signal processor 1. On the other hand, the timing control of the division circuit can be facilitated when the parallel digital video signals for the respective channels are scrambled in advance, thereby allowing the present FPGA to be used without modification. However, in the case of realizing the signal processor 1 using LSI with a sufficiently-high throughput, self-synchronization scrambling may be followed by the multiplexing.

Finally, an example in which the transmission system as described above is partially modified will be described. The modified example is provided for allowing the transmission system to carry out transmission in a manner similar to that of the case in which HD-SDI signals for seven or eight channels in equal frame rate and format are input in the signal processor 1 even in the case in which only a HD-SDI signals for one channel is input in the signal processor 1 at the sender or in the case in which HD-SDI signals for the respective channel have their own different frame rates and formants are input in the signal processor 1.

In this modified example, as shown in FIG.20, the TRS-detector 22 (FIG. 5), to which the HD-SDI signal for the first channel input in the signal processor 1 is transmitted, rewrites 3FFh, 000h, 000h in the timing reference signal SAV/EAV of the parallel digital video signal converted by the S/P converter 20 so as to read as 3FEh, 001 h, 00h using 3FEh and 001h from write-protected codes (the use of 3FEh and 00h, so that any of other write-protected codes may be used).

Provided that the HD-SDI signals for the respective channels is bit synchronized for input to the signal processor 1, the TRS-detectors 22 and 31 (FIG. 5) in the respective blocks 12-1 to 12-8 detect whether the frame rates and formats of the HD-SDI signals are identical to each other on the basis of format ID between the timing reference signals SAV/EAV.

The state of bit synchronization indicates a state in which HD-SDI signals for the respective channels to be input are synchronized with respect to the same system clock and mutually include equal bit rate (equal to 1.485 Gbps or 1.485 Gbps/1.001). The state where the frame rates are not matched indicates a state in which one channel has a frame rate of 30P and the other channel has a frame rate of 24P or 25P. The state where the formats are not matched indicates a state in which neither picture formats (the number of active samples × the number of active lines) or sampling systems (e.g., 4 : 2 ; 2 sampling or 4 : 4 : 4 sampling) are matched.

Furthermore, when the frame rates or the formats are not matched, parallel digital data is read from the FIFO memory 27 (FIG. 4) in the respective blocks 12-1 to 12-8 at any phase without adjusting the phase between the respective input channels. Therefore, in this case, for the parallel digital data multiplexed by the multiplexer 15 (FIG. 5), the code of a timing reference signal SAV/EAV for the first channel is different from that of a timing reference signal SAV/EAV for the second channel or subsequent channels. In addition, timing reference signals SAV/EAV of the respective channels are different in phase.

The TRS-detector 45 (FIG. 17) of the signal processor 5 at the receiver determines word synchronization with a break not in every 10 bits where 3FFh or 000h can be continuously detected but in every 10 bits where 3FFh or 001h can be continuously detected every 60 bits or 70 bits as shown in FIG. 2.

When the timing reference signals SAV/EAV of the respective channels are mutually in phase, codes which adjoin 3FEh or 001 arranged every 60 bits or 70 bits are 3FFh and 000h of the second channel or subsequent channels. On the other hand, when the timing reference signals SAV/EAV of the respective channels are out of phase, codes which adjoin 3FEh or 001 arranged every 60 bits or 70 bits are not 3FFh and 000h. However, word synchronization can be always determined by detecting 3FEh or 001h arranged every 60 or 70 bits without relating to the contents of adjoining codes.

Furthermore, the TRS-detector 45 (FIG. 17) writes back the detected codes: 3FEh,3FEh,001h,001h,001h,and 001h to the original codes: 3FFh, 3FFh, 000h, 000h, 000h, and 000h.

Therefore, the transmission of serial digital data with a bit rate of 10.395 Gbps or 11.88 Gbps can be performed in a manner similar to that of the case in which HD-SDI signals for seven or eight channels in an equal frame rate and format are input in the signal processor 1 even in the case in which only a HD-SDI signals for one channel is input in the signal processor 1 at the sender or in the case in which HD-SDI signals for the respective channel have the different frame rates and formants are input in the signal processor 1.

An embodiment of the present invention has been applied on the system where HD-SDI signals for seven or eight channels are multiplexed and then serially transmitted at a bit rate of 10.395 Gbps or 11.88 Gbps. However, the embodiment of the present invention may be applied on a system where HD-SDI signals for two or more channels other than seven or eight channels are multiplexed and serially transmitted at a high speed or a system where digital video signals other than HD-SDI signals are multiplexed for two or more channels with signals in the formant of arranging at least the video data section and the auxiliary data section in time sequence and then serially transmitted.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

**1.** A signal processor, comprising:

a serial-to-parallel converter configured to input serial digital video signals for n channels having a predetermined bit rate b1 in a format including at least both a video section and an auxiliary data section arranged in time sequence and to convert the serial digital video signals for respective channels into parallel digital video signals, where n represents an integer of 2 or more;
a frame-synchronization scrambler configured to scramble predetermined bits of the parallel digital video signals only in the video section for respective channels converted by the serial-to-parallel converter with random numbers generated by a random number generator for use as initial values of a register and to store the initial values in the auxiliary data section as auxiliary data;
a self-synchronization scrambler configured to scramble the parallel digital data for respective channels scrambled by the frame-synchronization scrambler; a multiplexer configured to multiplex the parallel digital data for respective channels scrambled by the self-synchronization scrambler;
a multi-channel forming unit configured to obtain a predetermined number of bits at one time from the parallel digital data multiplexed by the multiplexer and to form serial digital data for m channels each having a predetermined bit rate b2, where b2 represents a value smaller than b1, m represents an integer larger than n, and $b1 \times n$ is approximately equal to $b2 \times m$; and
a data-multiplexing parallel-to-serial converter configured to generate serial digital data having a bit rate of approximately $b1 \times n$ by multiplexing and converting the serial digital data for m channels formed by the multi-channel data forming unit.

**2.** A signal processor according to claim 1, wherein
the frame-synchronization scrambler scrambles the least significant bit in the video section.

**3.** A signal processor according to claim 1, wherein
the serial digital video signal further includes an error-correcting code section, and
the frame-synchronization scrambler stores an error-correcting code from the error-correcting code section into the auxiliary data section as auxiliary data and further includes an error-correcting code recalculator configured to recalculate an error-correcting code for the parallel digital data scrambled by the frame-synchronization scrambler and newly store the recalculated error-correcting code in the error-correcting code section.

**4.** A signal processor according to claim 1, wherein
HD-SDI signals compliant with the SMPTE 292M standard are input for seven channels or eight channels, and
the data-multiplexing parallel-to-serial converter generates serial digital data having a bit rate of 10 Gbps or more.

**5.** A signal processor according to claim 4, wherein
the self-synchronization scrambler scrambles the parallel digital data in compliance with the SMPTE 292M standard.

**6.** A signal processor according to claim 1, wherein
the serial digital video signal further includes a predetermined word section for synchronization, and
a rewriting unit configured to rewrite the predetermined words with other words in parallel digital video signals for a first channel that is converted into parallel digital signals by the serial-to-parallel converter.

**7.** A signal processor according to claim 6, further comprising:

a detector configured to detect whether or not the serial digital video signals for the second channel or subsequent channels are input; and
a generator configured to generate parallel digital video signals stored in the video signal section and in the word section for channels to which no serial digital video signals are input detected by the detector, wherein the parallel digital video signals generated by the generator are supplied to the frame synchronization scrambler in the channels to which no serial digital video signals are input detected by the detector.

**8.** A signal processor according to claim 6, further comprising:

a detector configured to detect whether or not frame rates and formats of the serial digital video signals between a first channel and a second channel are matched, wherein
the multiplexer multiplexes the serial digital video signals for channels in which at least one of the frame rates and the formats of the serial digital video signals between a first channel and a second channel are unmatched detected by the detector without aligning a phase of a predetermined word section with a phase of another channel.

**9.** A signal processor according to claim 6, wherein
the serial digital video signal indicates an HD-SDI signal compliant with the SMPTE292M standard, and
the rewrite unit rewrites words 3FFh, 000h, 000h in a timing reference signals into other write-protected codes.

**10.** A method of processing signals, comprising:

a first step of inputting serial digital video signals for n channels with a predetermined bit rate b1 in a format including at least a video section and an auxiliary data section arranged in time sequence and converting the serial digital video signals for respective channels into parallel digital video signals, where n represents an integer of 2 or more;
a second step of scrambling predetermined bits of the parallel digital video signals only in the video section for respective channels converted by scrambled by the frame-synchronization scrambler at the first step with random numbers generated by a random number generator for use as initial values of a register and storing the initial value in the auxiliary data section as auxiliary data;
a third step of scrambling the parallel digital data for respective channels scrambled at the second step by the self-synchronization scrambler;
a fourth step of multiplexing the parallel digital data for respective channels scrambled at the third step;
a fifth step of obtaining a predetermined number of bits at one time from the parallel digital data multiplexed at the fourth step and forming serial digital data for m channels each having a predetermined bit rate b2, where b2 represents a value smaller than b1, m represents an integer larger than n, and $b1 \times n$ approximately is equal to $b2 \times m$; and
a sixth step of generating serial digital data having a bit rate of approximately $b1 \times n$ by multiplexing and converting the serial digital data for m channels formed at the fifth step.

**11.** A signal processor, comprising:

a serial-to-parallel converting multi-channel data forming unit configured to convert serial digital video signals multiplexed for n channels having a predetermined bit rate b1 in a format including at least both a video section and an auxiliary data section arranged in time sequence into parallel digital video signals, where n represents an integer of 2 or more and to form serial digital data for m channels each having a predetermined bit rate b2 obtained from the converted parallel data, where b2 represents a value smaller than b1, m represents an integer larger than n, and $b1 \times n$ approximately is equal to $b2 \times m$; and
a multiplexer configured to multiplex the serial digital data for m channels formed by the serial-to-parallel converting multi-channel data forming unit;
a self-synchronization descrambler configured to descramble the parallel digital data multiplexed by the multiplexer;
a frame-synchronization descrambler configured to descramble a predetermined bits of the parallel digital data only in the video section with data read from the auxiliary data section of the parallel digital data descrambled by the-synchronization descrambler for use as initial values of a register;
an isolator configured to obtain a predetermined number of bits from the parallel digital data descrambled by the frame-synchronization descrambler to isolate the parallel digital data for n channels; and
a parallel-to-serial converter configured to convert the parallel digital data for respective channels isolated by the isolator into serial digital data to reproduce the serial digital video signals for respective channels each having a bit rate b1.

**12.** A signal processor according to claim 11, wherein
the frame-synchronization scrambler scrambles the least significant bit in the video section.

**13.** A signal processor according to claim 11, further comprising:

a recalculator for an error-correcting code configured to read an error-correcting code in the auxiliary data section of the parallel digital data for respective channels descrambled by the frame-synchronization descrambler, to correct the error using the read error-correcting code, and to rewrite the read error-correcting code into the original error-correcting section of the serial digital video signals.

**14.** A signal processor according to claim 11, wherein
the serial digital data includes a bit rate of 10 Gbps or more and obtained by multiplexing HD-SDI signals compliant with the SMPTE 292M standard for seven channels or eight channels.

**15.** A signal processor according to claim 14, wherein
the self-synchronization scrambler scrambles the serial digital data in compliance with the SMPTE 292M standard.

**16.** A signal processor according to claim 11, wherein
the serial digital video signal further includes a predetermined word section for word synchronization, the predetermined words rewritten into other words, and synchronization determining unit configured to detect the other words every predetermined bits and determine word synchronization.

**17.** A method of processing signals, comprising:

a first step of converting serial digital video signals multiplexed for n channels having a predetermined bit rate b1 in a format including at least both a video section and an auxiliary data section arranged in time sequence into parallel digital video signals, where n represents an integer of 2 or more; and forming serial digital data for m channels each having a predetermined bit rate b2 obtained from the converted parallel data, where b2 represents a value smaller than b1, m represents an integer larger than n, and $b1 \times n$ approximately is equal to $b2 \times m$;
a second step of multiplexing the serial digital data for m channels formed at the first step;
a third step of descrambling the parallel digital data multiplexed at the second step by the self-synchronization scrambler;
a fourth step of descrambling a predetermined bits of the parallel digital data only in the video section with data read from the auxiliary data section of the parallel digital data descrambled at the third step for use as initial values of a register;
a fifth step of obtaining a predetermined number of bits from the parallel digital data descrambled at the fourth step to isolate the parallel digital data for n channels; and
a sixth step of converting the parallel digital data for respective channels isolated at the fifth step into serial digital data to reproduce the serial digital video signals for respective channels each having a bit rate b1.

FIG. 1A

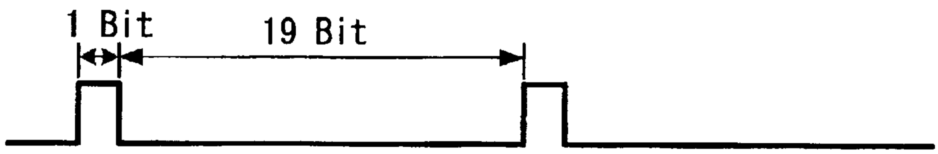


FIG. 1B

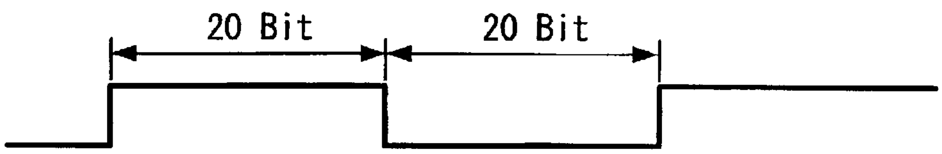


FIG. 2

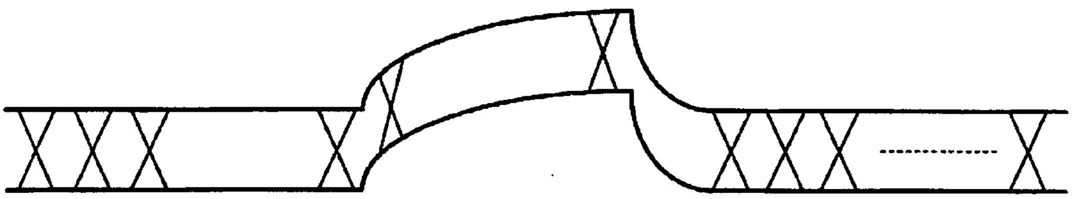

FIG. 3

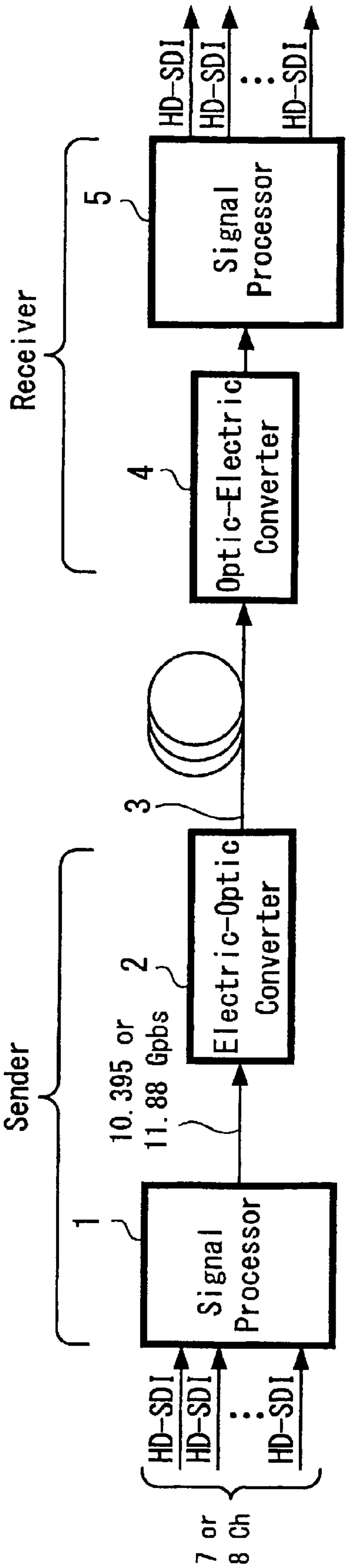
7 or
8 Ch
HD-SDI
HD-SDI
HD-SDI
Sender
1
Signal
Processor
10.395 or
11.88 Gpbs
2
Electric-Optic
Converter
3
Receiver
4
Optic-Electric
Converter
5
Signal
Processor
HD-SDI
HD-SDI
HD-SDI

FIG. 4

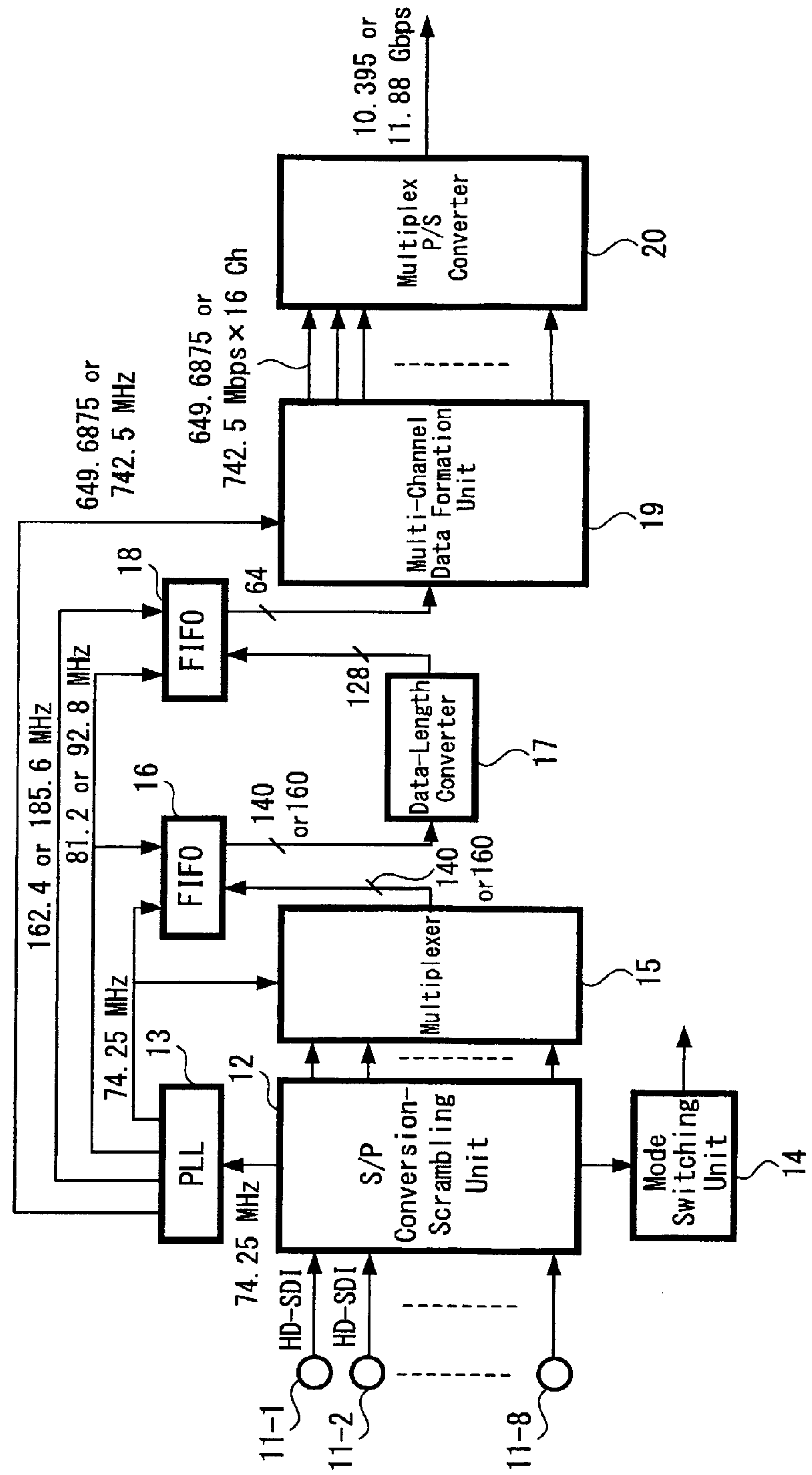
11-1
11-2
11-8
HD-SDI
HD-SDI
74.25 MHz
S/P Conversion-Scrambling Unit
12
PLL
13
74.25 MHz
Mode Switching Unit
14
Multiplexer
15
FIFO
16
140 or160
140 or160
162.4 or 185.6 MHz
81.2 or 92.8 MHz
Data-Length Converter
17
128
FIFO
18
64
649.6875 or 742.5 MHz
Multi-Channel Data Formation Unit
19
649.6875 or 742.5 Mbps×16 Ch
Multiplex P/S Converter
20
10.395 or 11.88 Gbps

FIG. 5

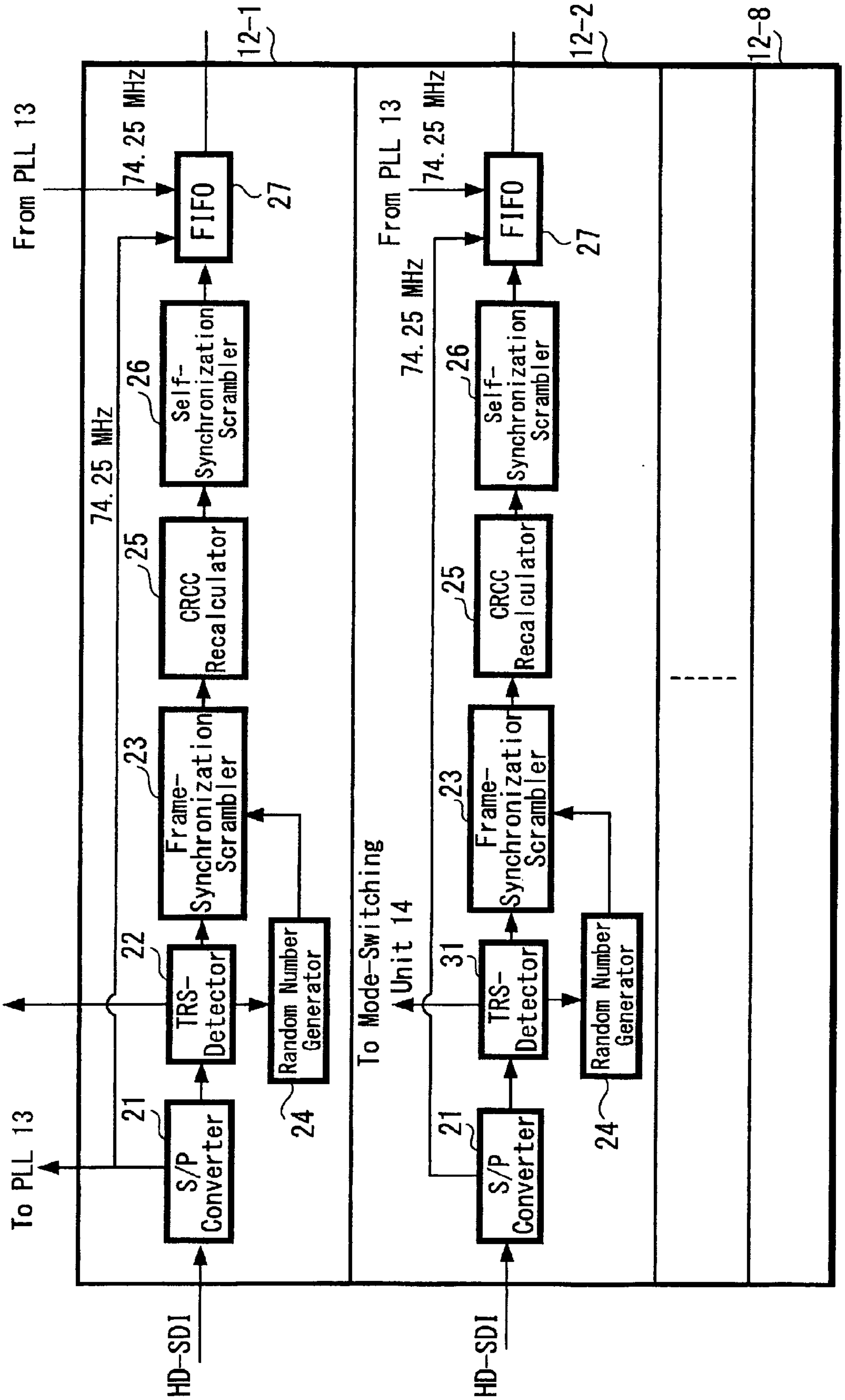

To PLL 13
To Mode-Switching Unit 14
From PLL 13
74.25 MHz
HD-SDI
S/P Converter
21
TRS-Detector
22
Random Number Generator
24
Frame-Synchronization Scrambler
23
CRCC Recalculator
25
Self-Synchronization Scrambler
26
FIFO
27
12-1
To Mode-Switching Unit 14
31
12-2
12-8

FIG. 6

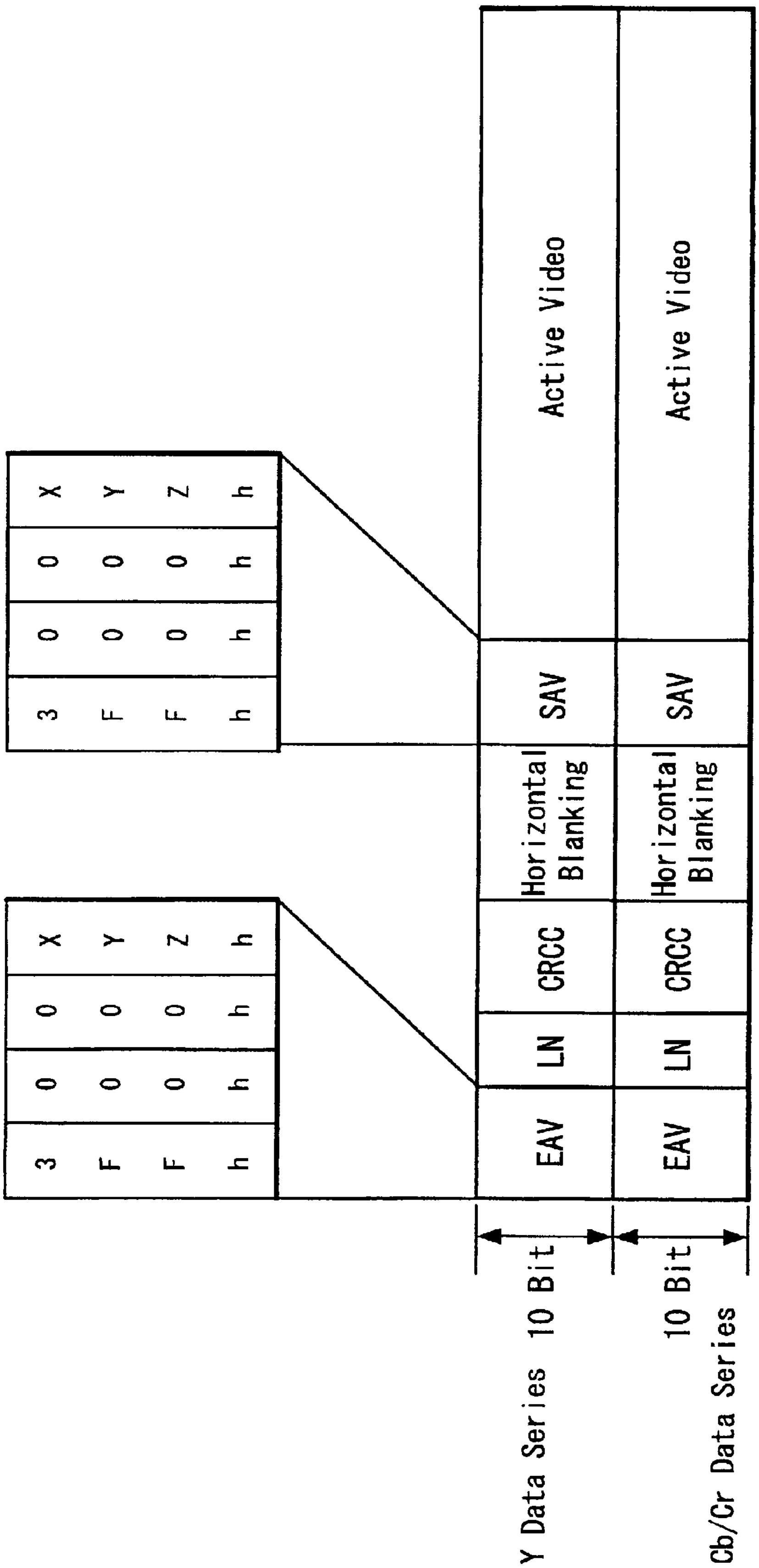

3 F F h
0 0 0 h
0 0 0 h
X Y Z h
3 F F h
0 0 0 h
0 0 0 h
X Y Z h
Y Data Series 10 Bit
Cb/Cr Data Series 10 Bit
EAV
LN
CRCC
Horizontal Blanking
SAV
Active Video
EAV
LN
CRCC
Horizontal Blanking
SAV
Active Video

FIG. 7

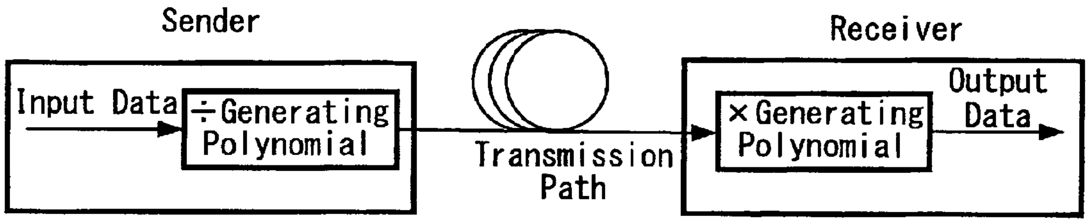


FIG. 8

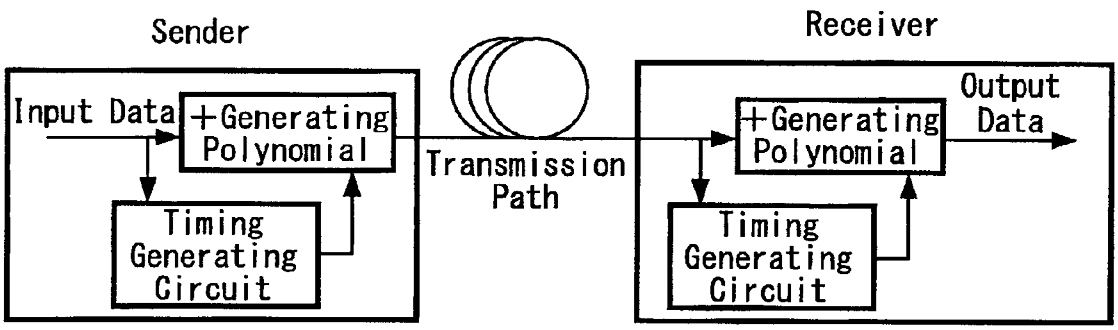


FIG. 9

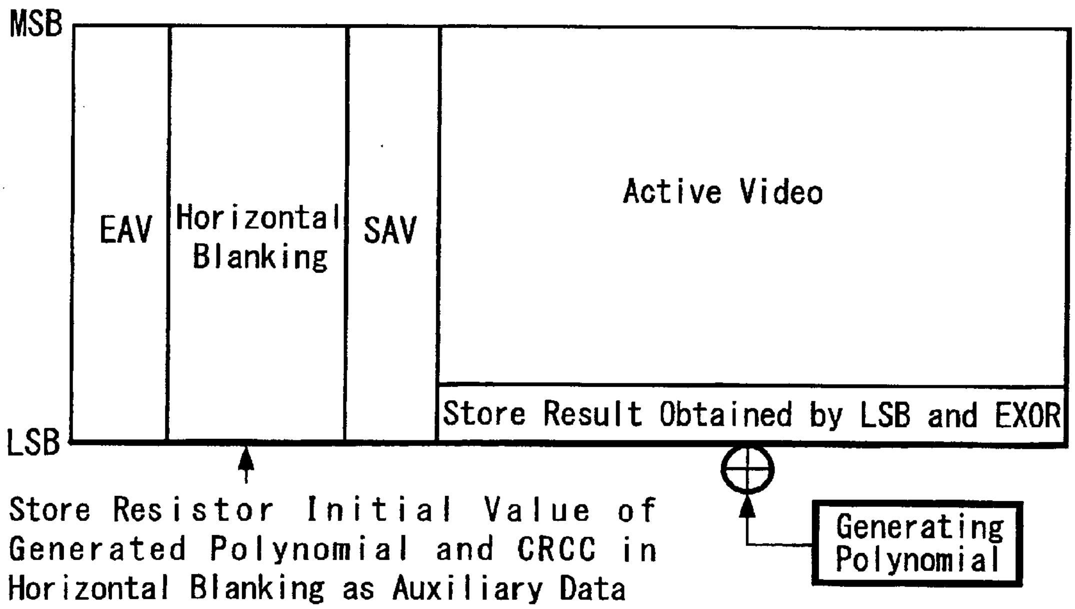

FIG. 10

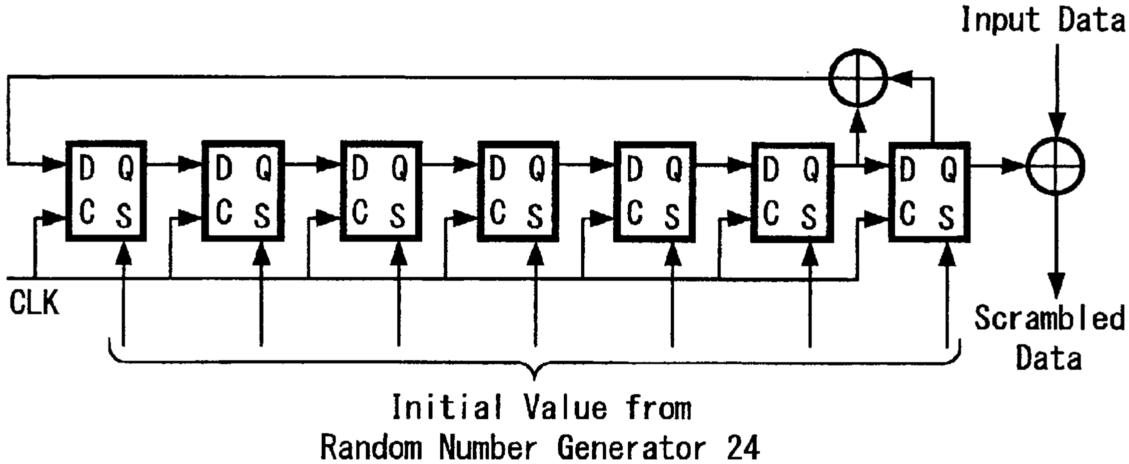
Input Data
D Q
C S
CLK
Scrambled Data
Initial Value from
Random Number Generator 24

FIG. 11

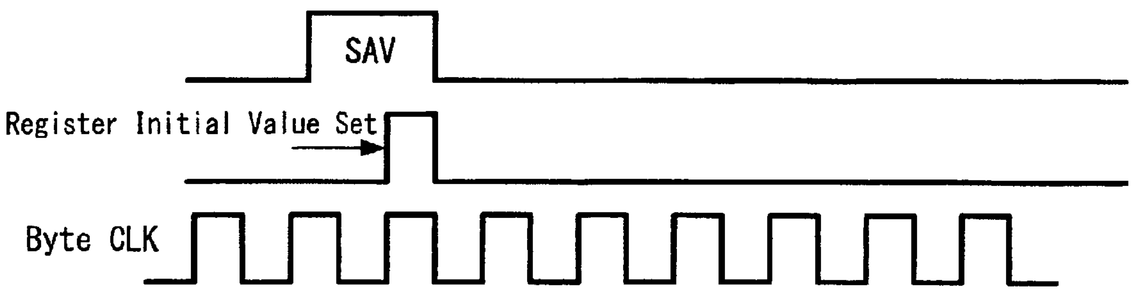
SAV
Register Initial Value Set
Byte CLK

FIG. 12

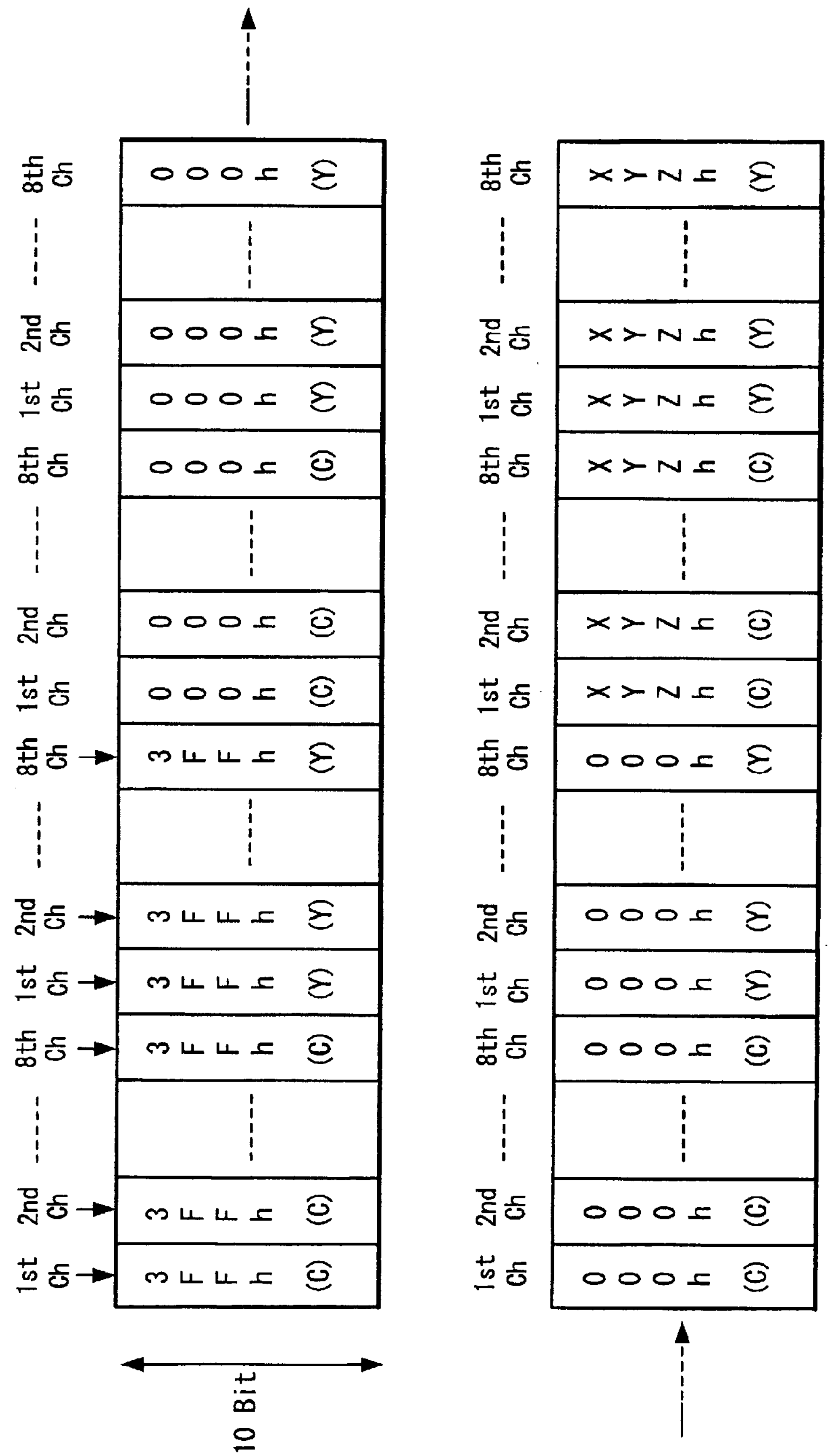
1st Ch
2nd Ch
8th Ch
3FFh (C)
3FFh (Y)
000h (C)
000h (Y)
XYZh (C)
XYZh (Y)
10 Bit

FIG. 13

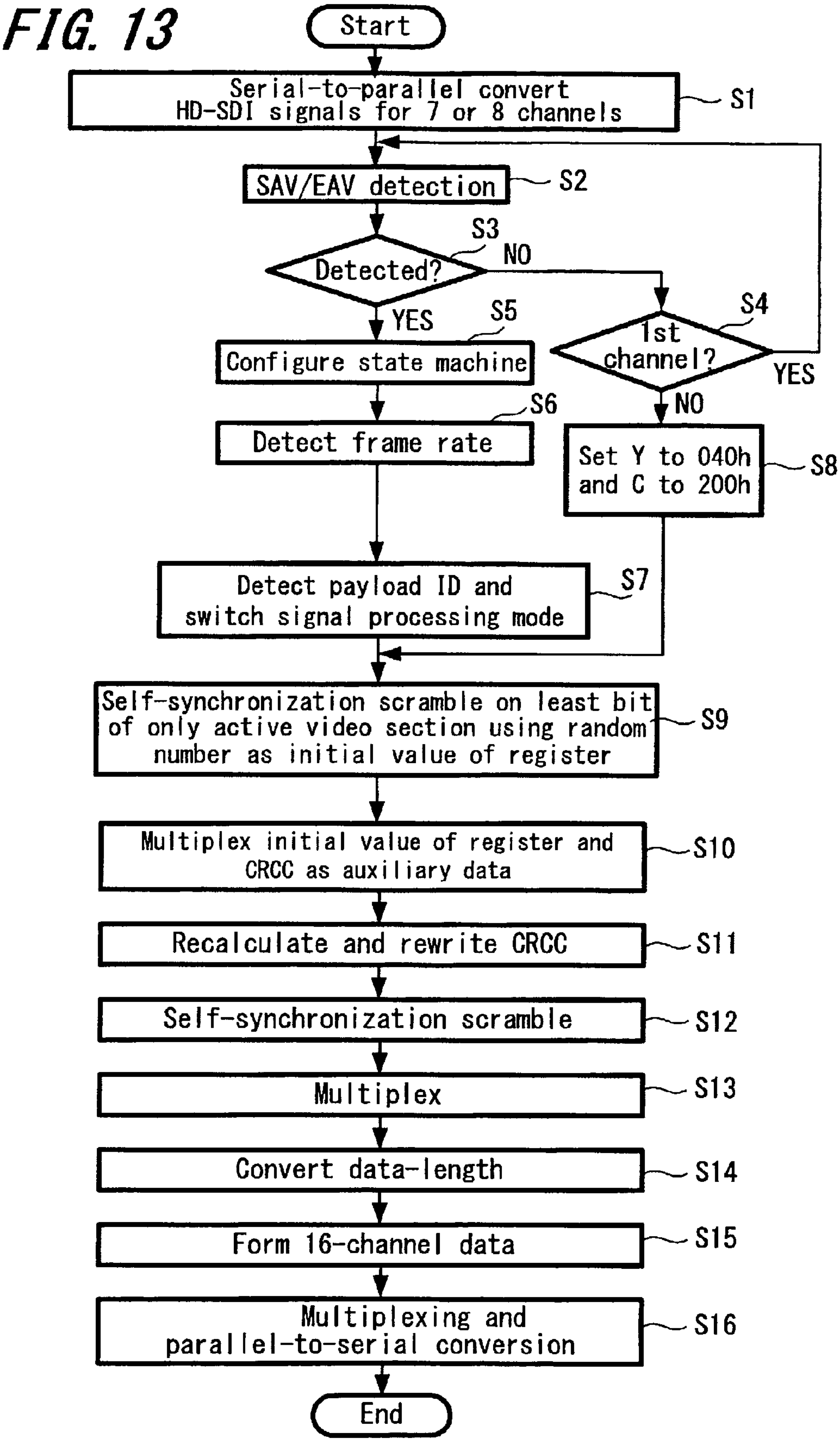
Start
Serial-to-parallel convert HD-SDI signals for 7 or 8 channels
S1
SAV/EAV detection
S2
Detected?
S3
NO
YES
1st channel?
S4
YES
NO
Configure state machine
S5
Detect frame rate
S6
Set Y to 040h and C to 200h
S8
Detect payload ID and switch signal processing mode
S7
Self-synchronization scramble on least bit of only active video section using random number as initial value of register
S9
Multiplex initial value of register and CRCC as auxiliary data
S10
Recalculate and rewrite CRCC
S11
Self-synchronization scramble
S12
Multiplex
S13
Convert data-length
S14
Form 16-channel data
S15
Multiplexing and parallel-to-serial conversion
S16
End

FIG. 14A

<HD-SDI 7ch@30P Transmission>

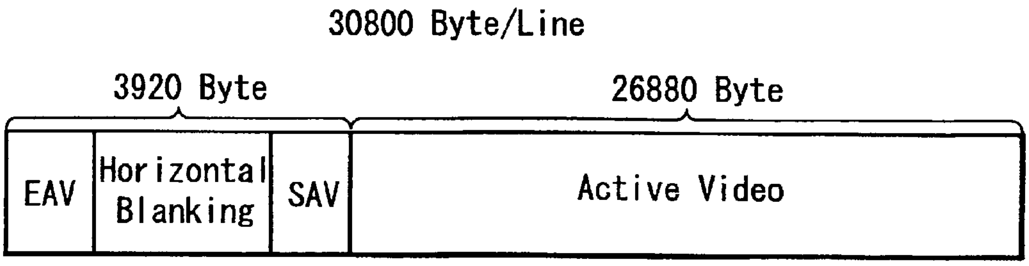


FIG. 14B

<HD-SDI 7ch@25P Transmission>

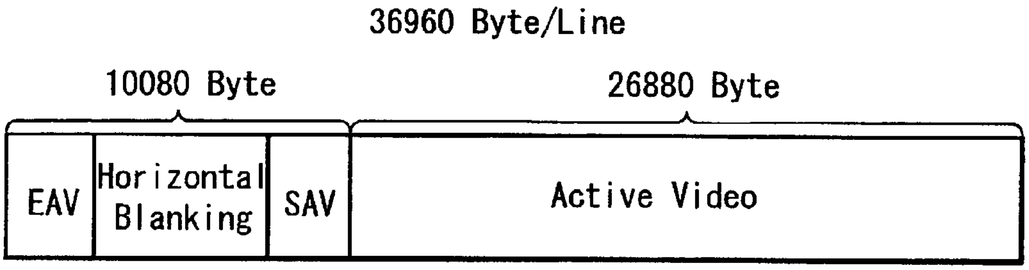


FIG. 14C

<HD-SDI 7ch@24P Transmission>

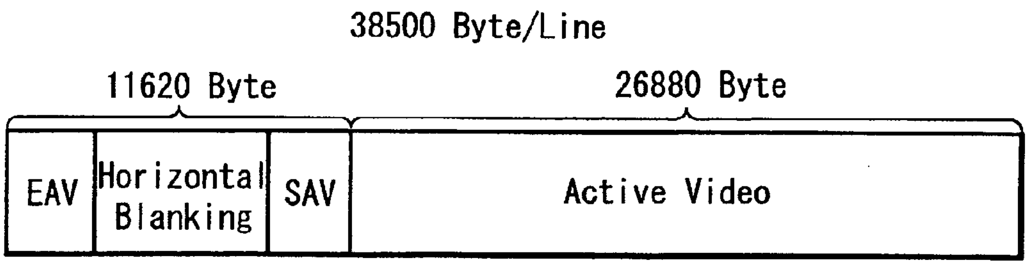


FIG. 14D

<HD-SDI 7ch@24P/2048 Sample Transmission>

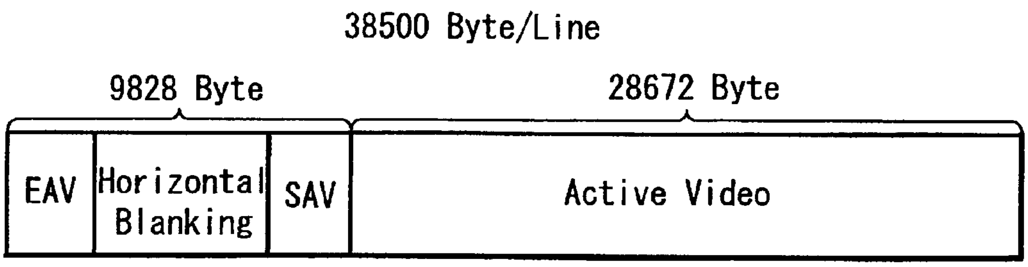

FIG. 15A

<HD-SDI 8ch@30P Transmission>

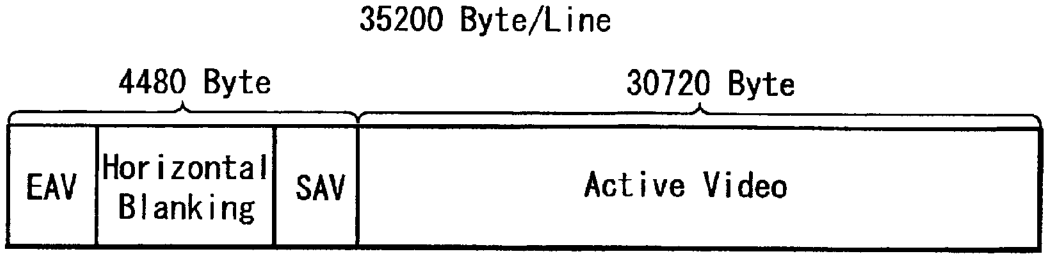


FIG. 15B

<HD-SDI 8ch@25P Transmission>

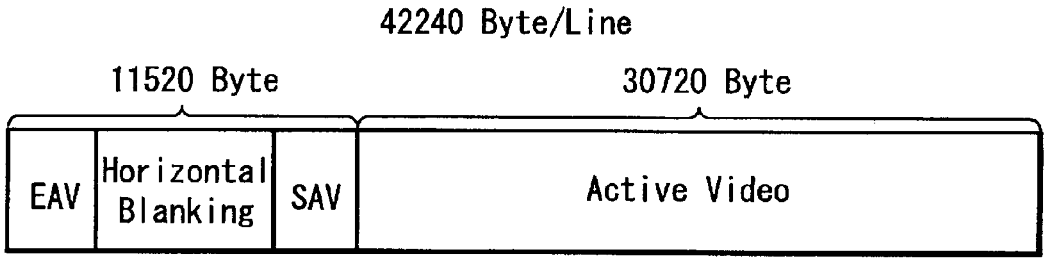


FIG. 15C

<HD-SDI 8ch@24P Transmission>

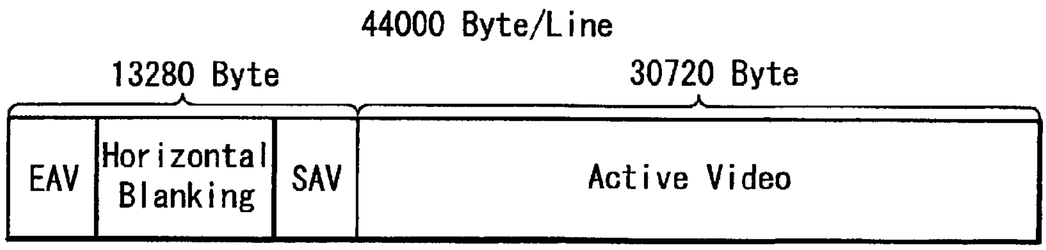


FIG. 15D

<HD-SDI 8ch@24P/2048 Sample Transmission>

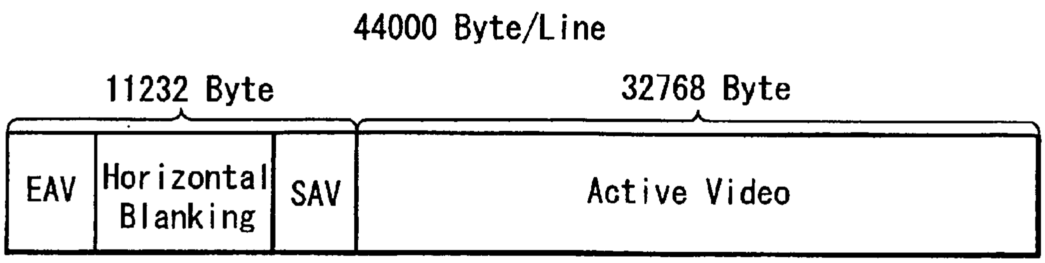

FIG. 16

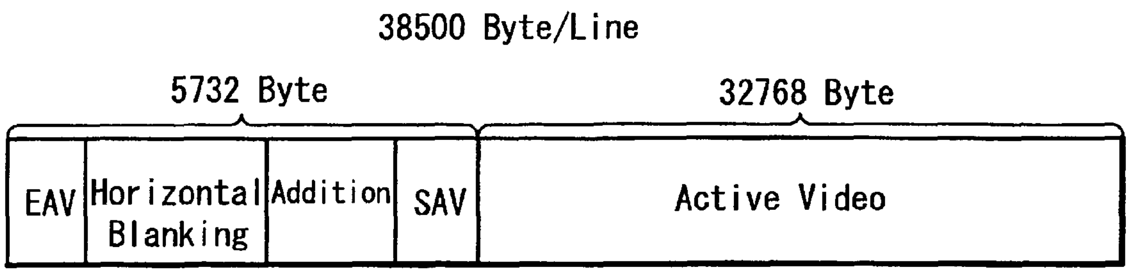
38500 Byte/Line
5732 Byte
32768 Byte
EAV
Horizontal Blanking
Addition
SAV
Active Video

FIG. 17

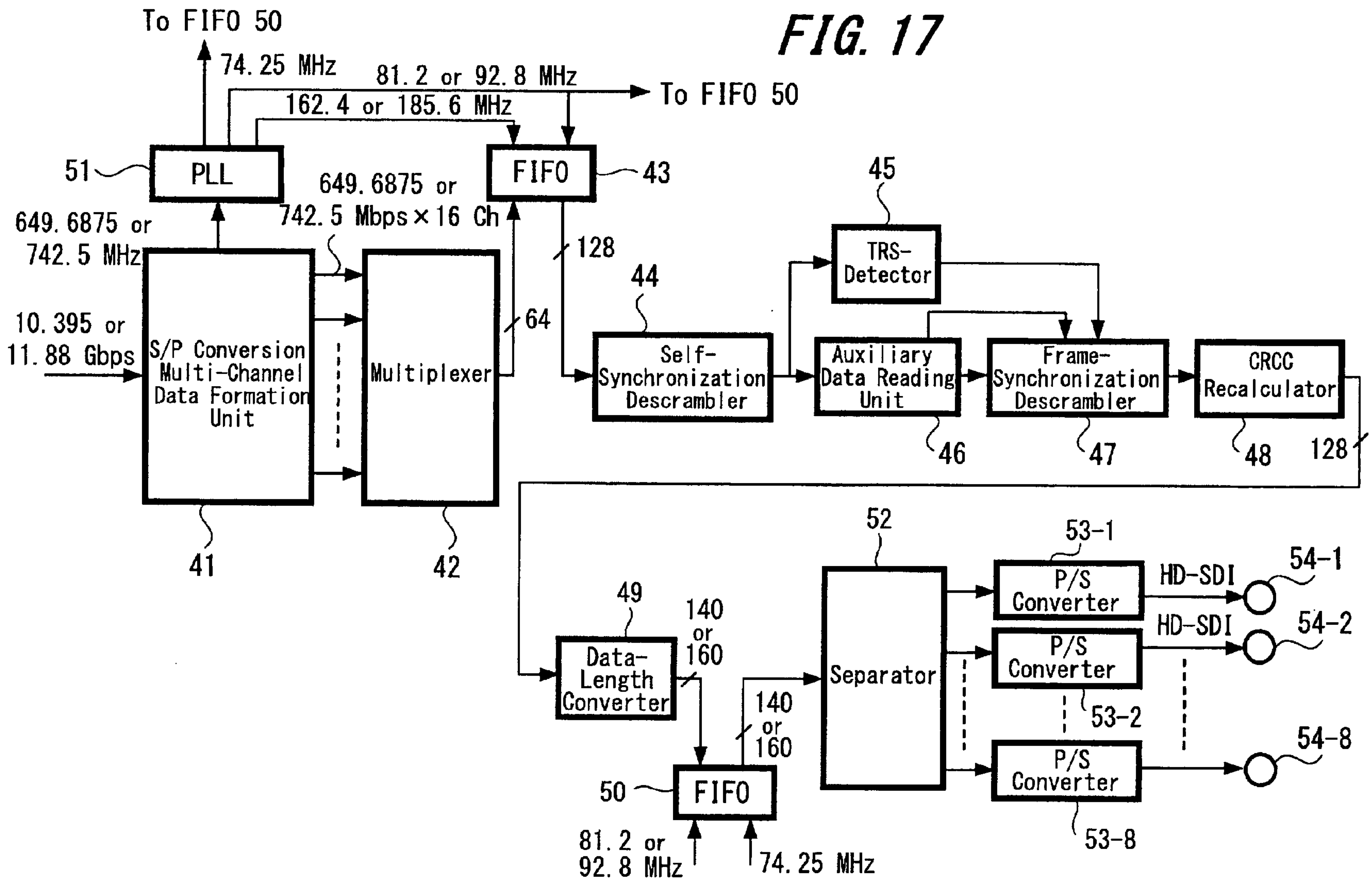
To FIFO 50
74.25 MHz
81.2 or 92.8 MHz
162.4 or 185.6 MHz
To FIFO 50
51
PLL
FIFO
43
649.6875 or
742.5 MHz
649.6875 or
742.5 Mbps × 16 Ch
10.395 or
11.88 Gbps
S/P Conversion
Multi-Channel
Data Formation
Unit
Multiplexer
64
128
41
42
44
Self-
Synchronization
Descrambler
45
TRS-
Detector
Auxiliary
Data Reading
Unit
46
Frame-
Synchronization
Descrambler
47
CRCC
Recalculator
48
128
49
Data-
Length
Converter
140
or
160
50
FIFO
81.2 or
92.8 MHz
74.25 MHz
52
Separator
53-1
P/S
Converter
HD-SDI
54-1
P/S
Converter
HD-SDI
54-2
53-2
P/S
Converter
53-8
54-8

FIG. 18

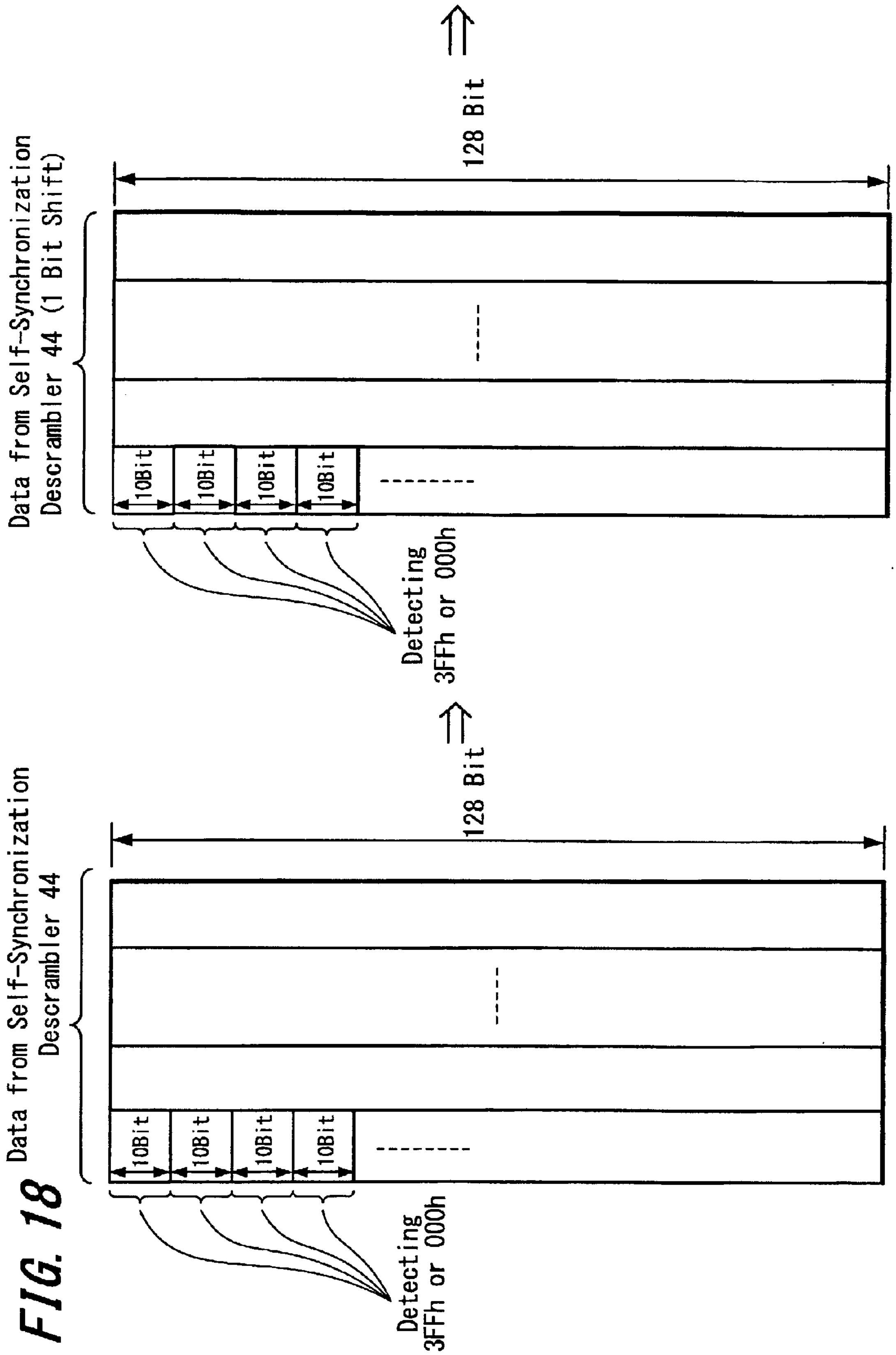
Data from Self-Synchronization Descrambler 44
128 Bit
10Bit
10Bit
10Bit
10Bit
Detecting 3FFh or 000h
Data from Self-Synchronization Descrambler 44 (1 Bit Shift)
128 Bit
10Bit
10Bit
10Bit
10Bit
Detecting 3FFh or 000h

FIG. 19

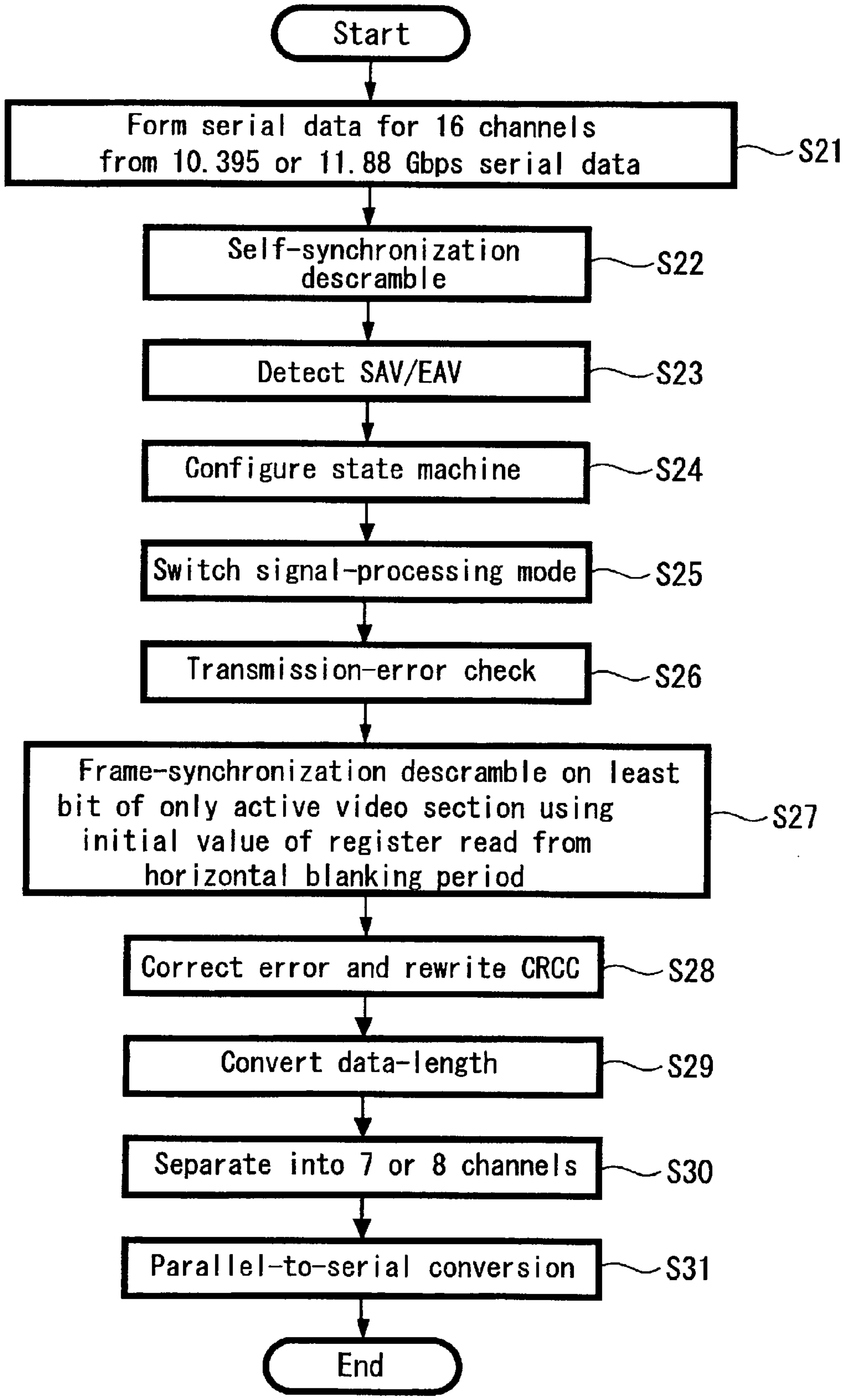
Start
Form serial data for 16 channels from 10.395 or 11.88 Gbps serial data
S21
Self-synchronization descramble
S22
Detect SAV/EAV
S23
Configure state machine
S24
Switch signal-processing mode
S25
Transmission-error check
S26
Frame-synchronization descramble on least bit of only active video section using initial value of register read from horizontal blanking period
S27
Correct error and rewrite CRCC
S28
Convert data-length
S29
Separate into 7 or 8 channels
S30
Parallel-to-serial conversion
S31
End

FIG. 20

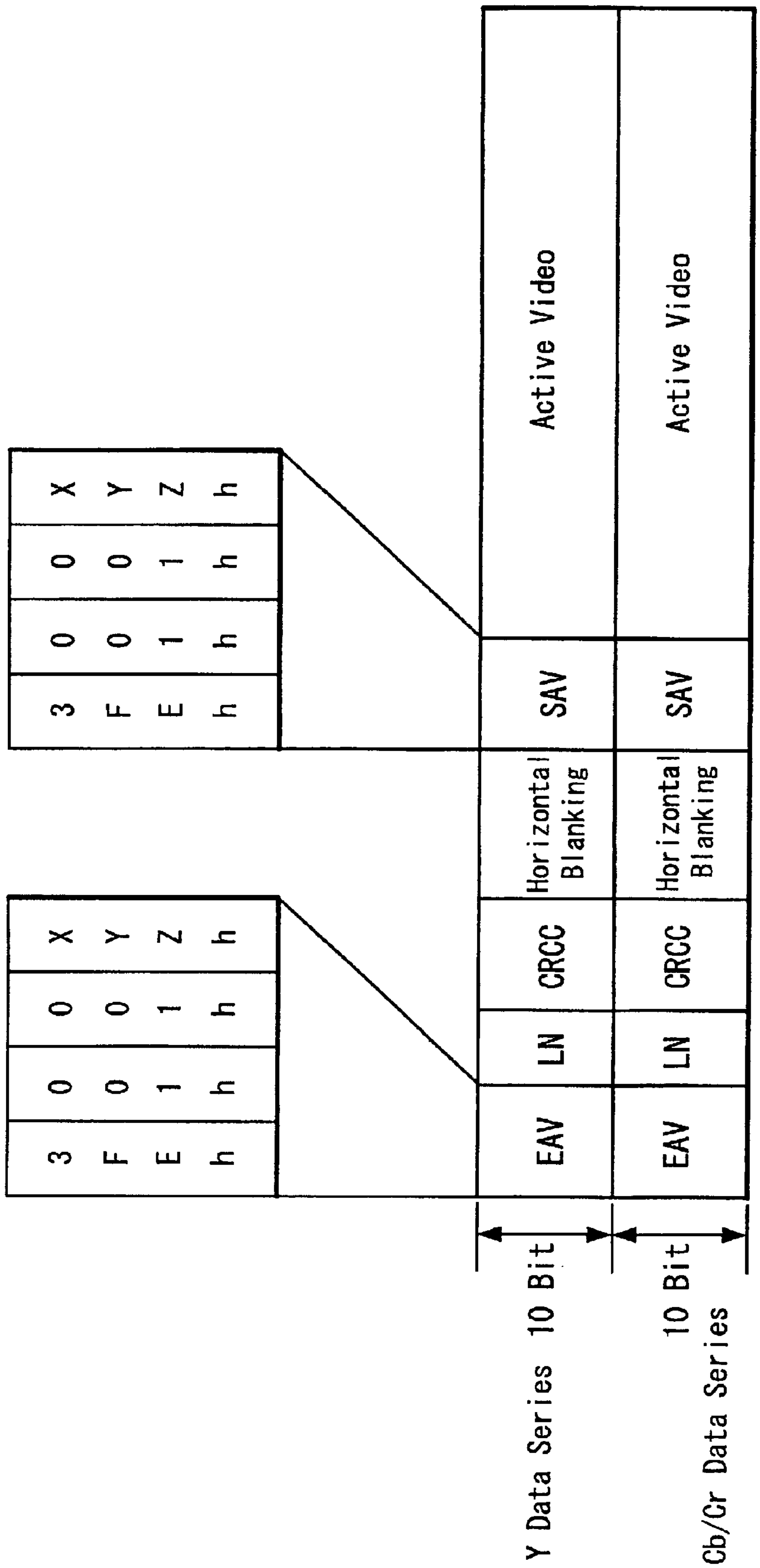
3 F E h
0 0 1 h
0 0 1 h
X Y Z h
3 F E h
0 0 1 h
0 0 1 h
X Y Z h
Y Data Series 10 Bit
10 Bit Cb/Cr Data Series
EAV
LN
CRCC
Horizontal Blanking
SAV
Active Video
EAV
LN
CRCC
Horizontal Blanking
SAV
Active Video

*FIG. 21*

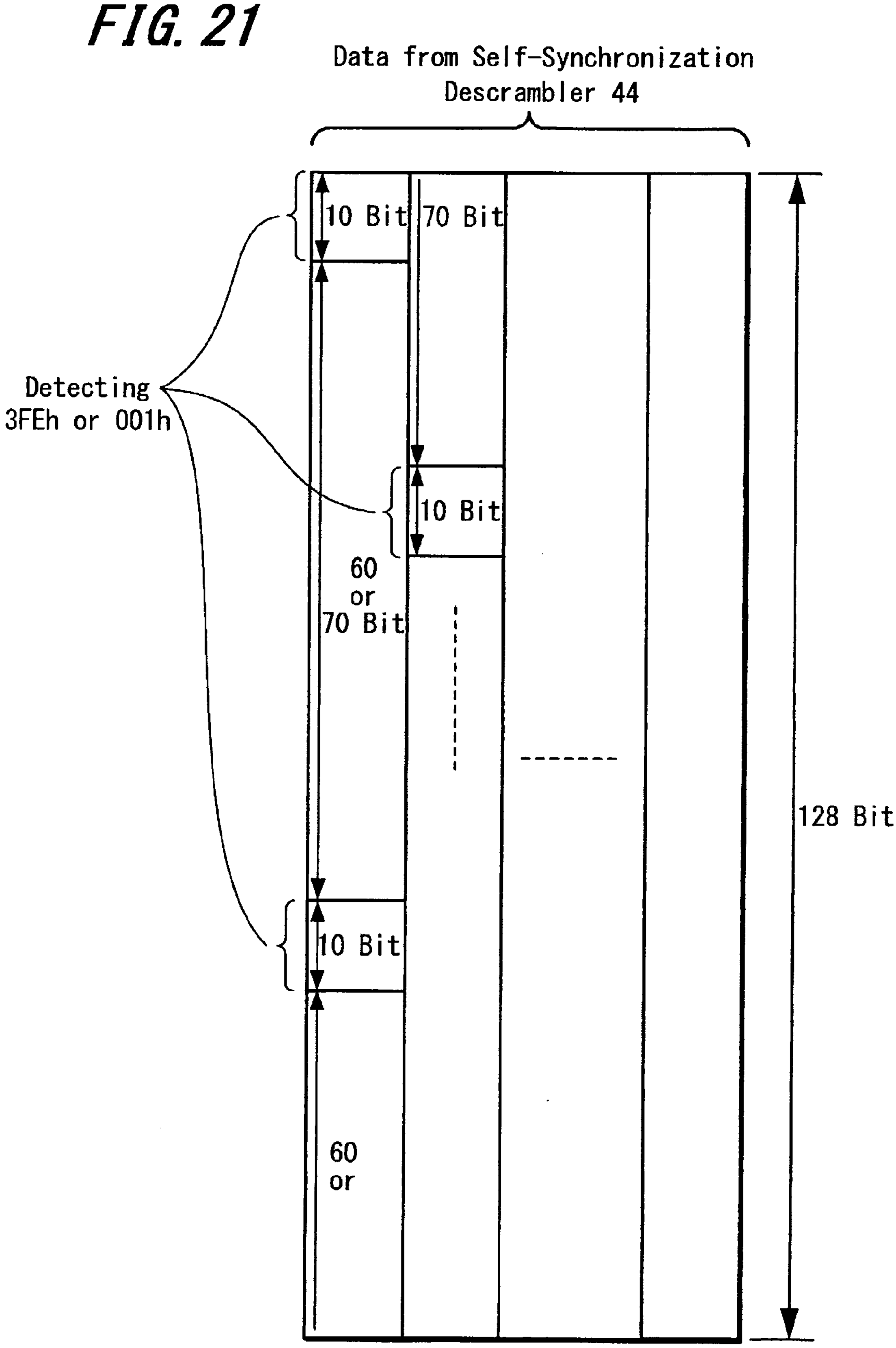
Data from Self-Synchronization Descrambler 44
10 Bit
70 Bit
Detecting 3FEh or 001h
10 Bit
60 or 70 Bit
10 Bit
60 or
128 Bit

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005218494 A